# EUROPÄISCHE PATENTSCHRIFT

(11) **EP 4 232 259 B1**
(45) Veröffentlichungstag und Bekanntmachung des Hinweises auf die Patenterteilung: **09.07.2025**
(21) Anmeldenummer: 21794554.2
(22) Anmeldetag: 19.10.2021
(51) Int. Cl.: B29C 48/25, B29C 48/40, B29C 48/65, B29C 48/42, B29C 48/27, B29C 48/60

(54) **EXTRUDER MIT BESONDERER ANORDNUNG VON ASYMMETRISCHEN SCHNECKENELEMENTEN AUF SCHNECKENWELLEN**
EXTRUDER WITH A SPECIAL ARRANGEMENT OF ASYMMETRIC SCREW ELEMENTS ON WORM GEARS
EXTRUDEUSE COMPRENANT UN SYSTÈME SPÉCIAL D'ÉLÉMENTS À VIS SANS FIN ASYMÉTRIQUES SUR LES ARBRES DE VIS SANS FIN

(30) Priorität: 22.10.2020 EP 20203230
(43) Veröffentlichungstag der Anmeldung: 30.08.2023
(73) Patentinhaber: Covestro Deutschland AG, 51373 Leverkusen (DE)
(72) Erfinder: KOENIG, Thomas, 51375 Leverkusen (DE); LIESENFELDER, Ulrich, 51469 Bergisch Gladbach (DE); ENGBERG, Roland, 40477 Düsseldorf (DE); SCHMIDT, Gudrun, 51381 Leverkusen (DE)
(74) Vertreter: Levpat
(86) Internationale Anmeldenummer: PCT/EP2021/078863
(87) Internationale Veröffentlichungsnummer: WO 2022/084272

(56) Entgegenhaltungen:
- EP-B1- 2 303 544
- EP-B1- 2 483 051
- EP-B1- 2 610 045
- WO-A1-2011/006516
- DE-U1- 202015 104 765
- US-A1- 2011 180 949

## Beschreibung

Gegenstand der vorliegenden Erfindung ist ein mehrwelliger Extruder mit gleichsinnig und gleichschnell drehenden Schneckenwellen, wobei diese Schneckenwellen jeweils mindestens einen Bereich mit besonderer Anordnung von Schneckenelementen aufweisen, wobei die Schneckenelemente ein asymmetrisches Schneckenquerschnittsprofil haben. Dabei liegen diese jeweils mindestens einen Bereiche auf unmittelbar benachbarten Schneckenwellen unmittelbar gegenüber. Gegenstand der vorliegenden Erfindung ist auch die Verwendung des erfindungsgemäßen Extruders zur Verarbeitung oder Herstellung von plastischen oder viskoelastischen Massen.

Im Sinne der vorliegenden Erfindung wird unter einem mehrwelligen Extruder ein Extruder mit mehr als einer Schneckenwelle verstanden, beispielsweise ein Extruder mit zwei, drei oder vier Schneckenwellen oder auch ein Extruder mit acht bis sechzehn, insbesondere zwölf, ringförmig angeordneten Schneckenwellen. Bei mehr als zwei Schneckenwellen können die Drehachsen der Schneckenwellen nebeneinander, in einem Vieleck mit einer Anzahl Ecken gleich der Anzahl der Wellen, oder beispielsweise auch - wie bei einem sogenannten Ringextruder - ringförmig zueinander angeordnet sein. Bei Mehrwellenextrudern im Sinne der vorliegenden Erfindung sind die Drehachsen der Schneckenwellen parallel zueinander angeordnet. Ein solcher Extruder mit mehr als einer Schneckenwelle wird auch mehrwellige Schneckenmaschine, Mehrwellenschneckenmaschine oder Mehrwellen-extruder genannt. Eine zweiwellige Schneckenmaschine wird nachfolgend auch Doppelschneckenextruder genannt. Im Sinne der vorliegenden Erfindung ist der Begriff "Extruder" gleichbedeutend mit dem Begriff "Schneckenmaschine". Bevorzugt handelt es sich bei dem erfindungsgemäßen Mehrwellenextruder um einen Extruder mit gleichschnell und gleichsinnig drehenden Schneckenwellen. Besonders bevorzugt handelt es sich bei dem erfindungsgemäßen Mehrwellenextruder um einen Doppelschneckenextruder mit gleichschnell und gleichsinnig drehenden Schneckenwellen oder um einen Mehrwellenextruder mit mehreren - insbesondere acht oder zwölf - ringförmig zueinander angeordneten, gleichschnell und gleichsinnig drehenden Schneckenwellen, ganz besonders bevorzugt handelt es sich bei dem erfindungsgemäßen Mehrwellenextruder um einen Doppelschneckenextruder mit gleichschnell und gleichsinnig drehenden Schneckenwellen.

Im Sinne der vorliegenden Erfindung zeichnet sich ein asymmetrisches Schneckenquerschnittsprofil dadurch aus, dass es keine Spiegelachse durch einen beliebigen Punkt in der Ebene des Schneckenquerschnittsprofils gibt, mit der ein zu einem Ausgangsschneckenquerschnittsprofil deckungsgleiches Schneckenquerschnittsprofil erzeugt werden kann; bevorzugt gibt es keine Spiegelachse durch einen beliebigen Punkt innerhalb eines Schneckenquerschnittsprofils, besonders bevorzugt keine Spiegelachse durch den Konstruktionsmittelpunkt eines Schneckenquerschnittsprofils, mit der ein zum Ausgangsprofil deckungsgleiches Profil erzeugt werden kann. Dabei ist der Konstruktionsmittelpunkt der Punkt innerhalb des Schneckenquerschnittprofils, der der Mittelpunkt sämtlicher Kreisbögen ist, die Kämme und Nuten bilden.

Im Sinne der vorliegenden Erfindung bedeutet, dass zwei Schneckenquerschnittsprofile deckungsgleich sind, wenn sich ein erstes Schneckenquerschnittsprofil und zweites Schneckenquerschnittsprofil durch Drehung oder Verschiebung auf der Ebene des Schneckenquerschnittsprofil oder Drehung und Verschiebung auf der Ebene des Schneckenquerschnittsprofils ineinander überführen lassen. Entsprechend sind zwei Schneckenquerschnittsprofile nicht deckungsgleich, wenn sich ein erstes Schneckenquerschnittsprofil und zweites Schneckenquerschnittsprofil weder durch Drehung oder Verschiebung auf der Ebene des Schneckenquerschnittsprofil noch durch Drehung und Verschiebung auf der Ebene des Schneckenquerschnittsprofils ineinander überführen lassen.

Im Rahmen der vorliegenden Erfindung ist es auch möglich, dass ein asymmetrisches Schneckenelement so auf der Kernwelle der Schneckenwelle aufgezogen ist, dass das asymmetrische Schneckenelement exzentrisch zur Drehachse der Kernwelle rotieren kann. Die Drehachse der Kernwelle einer Schneckenwelle fällt dabei mit der Drehachse der Schneckenwelle zusammen. Im Sinne der vorliegenden Erfindung zeichnet sich ein exzentrisch auf der Kernwelle der Schneckenwelle aufgezogenes Schneckenelement dadurch aus, dass der Drehpunkt des Schneckenquerschnittsprofils dieses Schneckenelements außerhalb des Konstruktionsmittelpunkts des Schneckenquerschnittsprofilprofils liegt.

Im Sinn der vorliegenden Erfindung wird unter dem Begriff "Schneckenquerschnittsprofil", kurz auch "Schneckenprofil" genannt, die äußere Kontur eines Schneckenelements im Querschnitt rechtwinklig zur Drehachse der Kernwelle, auf die das Schneckenelement zur bestimmungsgemäßen Verwendung aufgezogen wird, verstanden.

Extruder, insbesondere Mehrwellenextruder, werden unter anderem zur Entgasung oder Compoundierung von plastischen oder viskoelastischen Massen, insbesondere zur Entgasung oder Compoundierung von Kunststoffen, wiederum insbesondere zur Entgasung oder Compoundierung von Schmelzen oder Lösungen von thermoplastischen Polymeren oder Schmelzen oder Lösungen von Kautschuken, eingesetzt. Auch können Extruder, insbesondere Mehrwellenextruder, zur Reaktivextrusion von plastischen oder viskoelastischen Massen, insbesondere zur Reaktivextrusion von thermoplastischen Polyurethanen eingesetzt werden.

Sowohl Entgasungsextruder als auch Compoundierextruder als auch Extruder zur Reaktivextrusion sind aus der Fachliteratur hinlänglich bekannt, beispielsweise aus
[1] ([1] *=* Klemens Kohlgrüber: Der gleichläufige Doppelschneckenextruder, 2. Auflage, Hanser Verlag München 2016, S. 50-63, 63-66 und 755-757*).*

WO 2011/006516 A1, EP 2 303 544 B1, EP 2 610 045 B1, DE 20 2015 104765 U1, EP 2 483 051 B1, US 2011/180949 A1 und WO2011116965A1 offenbaren Beispiele von unterschiedliche Mehrwellen-Extruder.

Mehrwellenextruder, bei denen asymmetrische Schneckenelemente auf der Kernwelle einer Schneckenwelle aufgezogen sind, sind ebenfalls bekannt, beispielsweise aus der WO 2011/006516 A1.

Gemäß der Offenbarung der WO 2011/006516 A1 sind diese asymmetrisch auf den Kernwellen der Schneckenwellen eines Mehrwellenextruders aufgezogenen Schneckenelemente jeweils so auf der Kernwelle einer Schneckenwelle aufgezogen, dass sich ein Schneckenprofil eines ersten Schneckenelements durch Drehung und ggf. durch zusätzliches Verschieben in das Schneckenprofil eines unmittelbar davor- oder dahinterliegenden Schneckenelements auf derselben Schneckenwelle überführen lässt.

Bei den in der WO 2011/006516 A1 offenbarten zweigängigen Schneckenelementen hat erster Kamm einen größeren Abstand vom Drehpunkt des Schneckenelements als ein zweiter Kamm. Somit hat dieser erste Kamm einen geringeren Abstand zur Gehäuseinnenwand der Gehäusebohrung als dieser zweite Kamm; der erste Kamm weist also den engsten Spalt zur Gehäuseinnenwand der Gehäusebohrung auf.

Dies führt bei der in der WO 2011/006516 A1 offenbarten Anordnung der Schneckenelemente auf einer Schneckenwelle dazu, dass ein Gang der zwei Gänge der Schneckenwelle leerläuft, weil der Kamm mit dem kürzeren Abstand vom Drehpunkt des Schneckenelements die Gehäuseinnenwand nicht vollständig abstreift. Dadurch läuft insbesondere bei Teilfüllung eines Mehrwellenextruders während der Extrusion der zu extrudierenden Masse aus dem Gang, der dem Kamm mit dem kürzeren Abstand vom Drehpunkt des Schneckenelements in Drehrichtung vorgelagert ist, in den dahinter liegenden Gang, also den Gang, der dem Kamm mit dem größeren Abstand vom Drehpunkt des Schneckenelements in Drehrichtung vorgelagert ist. Es kommt also zu einem sogenannten "Leerlaufen" eines Ganges.

Mehrwellenextruder, bei denen Schneckenelemente mit einem symmetrischen Schneckenprofil, die exzentrisch auf der Kernwelle einer Schneckenwelle aufgezogen sind, sind ebenfalls bekannt, beispielsweise aus der WO 2011/116965 A1.

Bei Schneckenelementen mit drei oder mehr Kämmen, bei denen ein erster Kamm einen größeren Abstand vom Drehpunkt des Schneckenelements hat als ein zweiter Kamm oder weitere Kämme, dieser erste Kamm also den größten Abstand zum Drehpunkt des Schneckenelements hat, kommt es insbesondere bei Teilfüllung eines Mehrwellenextruders zum Leerlaufen aller Gänge außer des Gangs, der dem Kamm mit dem größten Abstand vom Drehpunkt des Schneckenelements in Drehrichtung vorgelagert ist.

Der kürzere Kamm ist bzw. die kürzeren Kämme sind in einem solchen Fall bei der Extrusion somit wirkungslos. Das führt zu einer geringeren Oberflächenerneuerung, einer geringeren Entgasungsoberfläche, einer schlechteren Mischwirkung, und einer schlechteren Dispergierung. Bei einem Entgasungsextruder sind insbesondere die geringere Oberflächenerneuerung und die geringeren Entgasungsoberfläche nachteilhaft, bei einem Compoundierextruder und bei der Reaktivextrusion sind insbesondere die schlechtere Mischwirkung und die schlechtere Dispergierung nachteilhaft. Nachteilhaft sowohl bei einem Entgasungsextruder als auch bei einem Compoundierextruder als auch bei einer Reaktivextrusion ist der verringerte Austausch von Wärme, der zur Überhitzung und damit zur Schädigung der zu extrudierenden Masse - kurz auch Extrudat genannt - führen kann. Insbesondere bei einer Reaktivextrusion ist es nötig, dass das Extrudat wirkungsvoll gekühlt werden kann.

Außerdem kommt es insbesondere bei Teilfüllung eines Mehrwellenextruders bei Extrudern, die einen Entgasungsdom aufweisen, im Bereich dieses Entgasungsdoms zu einer unerwünschten Ansammlung von Extrudat. Durch dieses Ansammeln im Bereich des Entgasungdoms kommt es zu einer Verweilzeitverlängerung des dort angesammelten Extrudats und somit zu unterschiedlichen Verweilzeiten von verschiedenen Teilen des Extrudats, was zu einer Verschlechterung der Eigenschaften des Extrudats führen kann. Dies führt insbesondere bei einer Reaktivextrusion zu schlechteren Eigenschaften des Extrudats. Es kann sogar so weit kommen, dass Teile des Extrudats so lange im Bereich des Entgasungsdoms verbleiben, dass sie völlig degradieren und so genannte "black specs" bilden. Dies bedingt starke Qualitätseinbußen beim Extrudat und hohe Ausschussraten. Auch muss der Entgasungsdom in solchen Fällen öfter gereinigt werden, was zu erhöhten Ausfallzeiten führt.

Im Sinne der vorliegenden Erfindung ist ein Extruder in einem bestimmten den Querschnitt umfassenden Raumabschnitt teilgefüllt, wenn von 5 % bis 90 % des für die Extrusion des Extrudats zur Verfügung stehenden Raums in diesem Abschnitt mit diesem Extrudat gefüllt sind.

Außerdem kann es insbesondere bei Teilfüllung bei Extrudern mit horizontal nebeneinander angeordneten Schneckenwellen, wie beispielsweise einem Zweiwellenextruder, dazu kommen, dass sich das Extrudat in einer Gehäusebohrung einer der Schneckenwellen anreichert. Dies verstärkt die oben genannten Nachteile noch und führt insbesondere bei einer Reaktivextrusion zu schlechteren Eigenschaften des Extrudats, da - wie bereits oben erläutert - unterschiedliche Verweilzeiten von verschiedenen Teilen des Gesamtextrudats im Extruder vorliegen.

In der WO 2011/006516 A1 wird versucht, diese Nachteile dadurch zu beheben, dass zwei asymmetrische mindestens zweigängige Schneckenelemente derart hintereinander angeordnet werden, dass deren Schneckenprofile durch Drehung auf ein und derselben Schneckenwelle zueinander versetzt sind.

Jedoch treten auch bei der Anordnung nach WO 2011/006516 A1 die oben dargestellten Nachteile auf, da aufgrund der Tatsache, dass zwei unmittelbar aufeinander folgende asymmetrische mindestens zweigängige Schneckenelemente nur durch Drehung auf ihrer jeweiligen Welle zueinander versetzt sind, die Schneckenprofile dieser Schneckenelemente daher also durch Drehung ineinander überführbar sind, es weiter so ist, dass
der Gang, der im Querschnittsbereich eines ersten Schneckenelements dem Kamm mit dem größten Abstand vom Drehpunkt des Schneckenelements in Drehrichtung vorgelagert ist, im Querschnittsbereich eines zweiten unmittelbar auf das erste Schneckenelement folgende Schneckenelement auch wieder einem Kamm vorgelagert ist, der den größten Abstand zum Drehpunkt des Schneckenelements aufweist. Es liegt also wieder die gleiche geometrische Anordnung vor.

Das hat wieder zur Folge, dass entweder in axialer Richtung in der gleichen Gehäusebohrung in Drehrichtung entweder immer der enge Gang, also der Gang, der durch die Nut mit dem geringerem Abstand zum Drehpunkt gebildet wird, dem engen Spalt vorgelagert ist oder der weite Gang, also der Gang, der durch die Nut mit größerem Abstand zum Drehpunkt gebildet wird, dem engen Spalt vorgelagert ist.

Es kommt bei Teilfüllung also weiterhin zu einem sogenannten "Leerlaufen" eines Ganges. Außerdem wird so nicht verhindert, dass sich das Extrudat in einer Gehäusebohrung sammelt.

Auch hat bei Vollfüllung, also wenn bei einem Extruder in einem bestimmten Raumabschnitt umfassend den Querschnitt mehr als 90 % des für die Extrusion des Extrudats zur Verfügung stehenden Raums in diesem Abschnitt mit diesem Extrudat gefüllt sind, haben die in WO 2011/006516 A1 und WO 2011/116965 A1 gezeigten Anordnungen den Nachteil, dass sowohl zwischen den Gängen einer Schneckenwelle als auch zwischen den Gehäusebohrungen nur wenig Extrudat ausgetauscht wird. Auch kann so bei zwei auf einer Schneckenwelle aufeinander folgenden Schneckenelementen bei dem in Förderrichtung zweiten Schneckenelement nicht das Gangvolumen in Förderrichtung vor einem Kamm dieses zweiten Schneckenelements unabhängig von der Lage des entsprechenden Kamms des vorangehenden Schneckenelements verändert werden. Dadurch kommt es zu einem geringen Wärmeaustausch und einer geringen Durchmischung des Extrudats.

Aufgabe der vorliegenden Erfindung ist es, die genannten Nachteile des Stands der Technik zu überwinden.

Insbesondere Aufgabe der vorliegenden Erfindung ist es, einen Extruder zur Verfügung zu stellen, der die genannten Nachteile des Stands der Technik überwindet.

Weiter insbesondere ist es Aufgabe der vorliegenden Erfindung, einen Mehrwellenextruder zur Verfügung zu stellen, mit dem verhindert wird, dass ein Gang oder mehrere Gänge einer Schneckenwelle oder eine Gehäusebohrung oder mehrere Gehäusebohrungen leerlaufen oder - sofern ein Extruder einen Entgasungsdom aufweist - sich im Bereich eines Entgasungsdoms eines Extruders unerwünschterweise Extrudat ansammelt.

Überraschenderweise wird die Aufgabe durch einen Extruder mit den Merkmalen des Hauptanspruchs gelöst.

Gegenstand der Erfindung ist daher gemäß einer ersten Ausführungsform
ein Extruder mit zwei oder mehr gleichsinnig und gleichschnell drehenden, parallelen Schneckenwellen,
deren unmittelbar benachbarte Drehachsen alle den gleichen Achsabstand a besitzen und
mit zwei oder mehr einander durchdringenden, kreisförmigen Gehäusebohrungen um die jeweiligen Drehachsen, die jeweils einen identischen Gehäuseinnendurchmesser dg aufweisen und deren jeweilige unmittelbar benachbarte Bohrungsmittelpunkte einen Abstand besitzen, der gleich dem Achsabstand a ist, und deren jeweilige unmittelbar benachbarte Bohrungsmittelpunkte mit den Mittelpunkten des Querschnitte der jeweiligen unmittelbar benachbarten Drehachsen der Schneckenwellen zusammenfallen,
wobei
auf mindestens zwei unmittelbar benachbarten Schneckenwellen jeweils mindestens zwei Schneckenelemente mit asymmetrischem Schneckenprofil sich unmittelbar gegenüberliegen,
und wobei
die Schneckenelemente mit asymmetrischem Schneckenprofil, die sich auf mindestens zwei unmittelbar benachbarten Schneckenwellen unmittelbar gegenüberliegen,
sich einander exakt abreinigen,
und wobei die mindestens zwei auf jeweils einer Schneckenwelle liegenden Schneckenelemente mit asymmetrischem Schneckenprofil axial unmittelbar aufeinander folgen,
und wobei
das Schneckenprofil des zweiten Schneckenelements der mindestens zwei unmittelbar aufeinander folgenden Schneckenelemente mit asymmetrischem Schneckenprofil auf einer ersten Schneckenwelle der mindestens zwei unmittelbar benachbarten Schneckenwellen ein Schneckenprofil ist, das nicht deckungsgleich zum Schneckenprofil des ersten der mindestens zwei unmittelbar aufeinander folgenden Schneckenelemente mit asymmetrischem Schneckenprofil auf dieser ersten Schneckenwelle der mindestens zwei unmittelbar benachbarten Schneckenwellen ist,
wobei ein Schneckenprofil asymmetrisch ist, wenn es für das jeweilige Schneckenprofil keine Spiegelachse durch einen beliebigen Punkt in der Ebene des jeweiligen Schneckenprofils gibt, mit der ein zu diesem Schneckenprofil deckungsgleiches Schneckenprofil erzeugt werden kann,
und wobei
zwei Schneckenprofile nicht deckungsgleich sind, wenn sich ein erstes Schneckenprofil und zweites Schneckenprofil weder durch Drehung oder Verschiebung auf der Ebene des Schneckenprofils noch durch Drehung und Verschiebung auf der Ebene des Schneckenprofils ineinander überführen lassen.

Erfindungsgemäß bevorzugt ist dabei, dass
das Schneckenprofil des zweiten Schneckenelements der mindestens zwei unmittelbar aufeinander folgenden Schneckenelemente mit asymmetrischem Schneckenprofil auf einer ersten Schneckenwelle der mindestens zwei unmittelbar benachbarten Schneckenwellen ein durch Spiegelung an einer Spiegelachse in der Ebene des Schneckenprofils erzeugtes Spiegelbild des ersten der mindestens zwei unmittelbar aufeinander folgenden Schneckenelemente mit asymmetrischem Schneckenprofil auf dieser ersten Schneckenwelle der mindestens zwei unmittelbar benachbarten Schneckenwellen ist.
Diese bevorzugte Ausführungsform des erfindungsgemäßen Verfahrens stellt eine zweite Ausführungsform nach der oben dargestellten ersten Ausführungsform dar.

Erfindungsgemäß alternativ bevorzugt ist dabei, dass
das Schneckenprofil des ersten Schneckenelements und das Schneckenprofil des zweiten Schneckenelements der mindestens zwei unmittelbar aufeinander folgenden Schneckenelemente mit asymmetrischem Schneckenprofil auf einer ersten Schneckenwelle der mindestens zwei unmittelbar benachbarten Schneckenwellen als einander exakt abreinigende Schneckenprofile ausgestaltet sind,
und wobei
das Schneckenprofil des zweiten Schneckenelements kein durch Spiegelung an einer Spiegelachse erzeugtes Spiegelbild des Schneckenprofils des ersten Schneckenelements ist.
Diese alternativ bevorzugte Ausführungsform des erfindungsgemäßen Verfahrens stellt eine dritte Ausführungsform nach der oben dargestellten ersten Ausführungsform dar.

Zwei Schneckenelemente, deren Schneckenprofile gemäß dieser dritten Ausführungsform ausgestaltet sind, und die in einem Extruder mit zwei oder mehr gleichsinnig und gleichschnell drehenden parallelen Schneckenwellen,
deren unmittelbar benachbarte Drehachsen alle den gleichen Achsabstand a besitzen und mit zwei oder mehr einander durchdringenden, kreisförmigen Gehäusebohrungen um die jeweiligen Drehachsen, die jeweils einen identischen Gehäuseinnendurchmesser dg aufweisen und deren jeweilige unmittelbar benachbarte Bohrungsmittelpunkte einen Abstand besitzen, der gleich dem Achsabstand a ist, und deren jeweilige unmittelbar benachbarte Bohrungsmittelpunkte mit den Mittelpunkten des Querschnitte der jeweiligen unmittelbar benachbarten Drehachsen der Schneckenwellen zusammenfallen,
reinigten sich also einander exakt ab,
wenn sie sich auf zwei unmittelbar benachbarten Schneckenwellen sich unmittelbar gegenüberlägen.

Erfindungsgemäß bevorzugt ist es bei der dritten Ausführungsform so, dass die Fläche des Schneckenprofils des ersten Schneckenelements und die Fläche des Schneckenprofil des zweiten Schneckenelements unterschiedlich sind.

Erfindungsgemäß besonders bevorzugt ist dabei, dass
das Schneckenelement mit asymmetrischem Schneckenprofil, das auf einer zweiten Schneckenwelle der mindestens zwei unmittelbar benachbarten Schneckenwellen dem ersten Schneckenelement mit asymmetrischem Schneckenprofil auf der ersten Schneckenwelle der mindestens zwei unmittelbar benachbarten Schneckenwellen unmittelbar gegenüberliegt, das gleiche Schneckenprofil aufweist wie das erste Schneckenelement mit asymmetrischem Schneckenprofil, das auf der ersten Schneckenwelle der mindestens zwei unmittelbar benachbarten Schneckenwellen liegt.

Diese besonders bevorzugte Ausführungsform des erfindungsgemäßen Verfahrens stellt eine vierte Ausführungsform nach der oben dargestellten zweiten Ausführungsform dar.

Weiter erfindungsgemäß besonders bevorzugt ist dabei, dass
das Schneckenelement mit asymmetrischem Schneckenprofil, das auf einer zweiten Schneckenwelle der mindestens zwei unmittelbar benachbarten Schneckenwellen dem ersten Schneckenelement mit asymmetrischem Schneckenprofil auf der ersten Schneckenwelle der mindestens zwei unmittelbar benachbarten Schneckenwellen unmittelbar gegenüberliegt,
ein Schneckenprofil aufweist, das sich von dem Schneckenprofil des ersten Schneckenelements mit asymmetrischem Schneckenprofil, das auf der ersten Schneckenwelle der mindestens zwei unmittelbar benachbarten Schneckenwellen liegt, unterscheidet.

Diese weiter besonders bevorzugte Ausführungsform des erfindungsgemäßen Verfahrens stellt eine fünfte Ausführungsform nach der oben dargestellten zweiten Ausführungsform oder nach der oben dargestellten dritten Ausführungsform dar.

Erfindungsgemäß ganz besonders bevorzugt ist dabei, dass
das Schneckenelement mit asymmetrischem Schneckenprofil, das auf einer zweiten Schneckenwelle der mindestens zwei unmittelbar benachbarten Schneckenwellen dem ersten Schneckenelement mit asymmetrischem Schneckenprofil auf der ersten Schneckenwelle der mindestens zwei unmittelbar benachbarten Schneckenwellen unmittelbar gegenüberliegt,
ein Schneckenprofil aufweist, das sich von dem Schneckenprofil des ersten Schneckenelements mit asymmetrischem Schneckenprofil, das auf der ersten Schneckenwelle der mindestens zwei unmittelbar benachbarten Schneckenwellen liegt, unterscheidet,
und ein Schneckenprofil aufweist, das ein durch Spiegelung an einer Spiegelachse erzeugtes Spiegelbild des Schneckenprofils des ersten Schneckenelements mit asymmetrischem Schneckenprofil, das auf der ersten Schneckenwelle der mindestens zwei unmittelbar benachbarten Schneckenwellen liegt, ist.

Diese ganz besonders bevorzugte Ausführungsform des erfindungsgemäßen Verfahrens stellt eine sechste Ausführungsform nach der oben dargestellten zweiten Ausführungsform oder nach der oben dargestellten fünften Ausführungsform dar.

Erfindungsgemäß alternativ ganz besonders bevorzugt ist dabei, dass
das Schneckenelement mit asymmetrischem Schneckenprofil, das auf einer zweiten Schneckenwelle der mindestens zwei unmittelbar benachbarten Schneckenwellen dem ersten Schneckenelement mit asymmetrischem Schneckenprofil auf der ersten Schneckenwelle der mindestens zwei unmittelbar benachbarten Schneckenwellen unmittelbar gegenüberliegt,
weder ein Schneckenprofil aufweist, das ein durch Spiegelung an einer Spiegelachse erzeugtes Spiegelbild des Schneckenprofils des ersten Schneckenelements mit asymmetrischem Schneckenprofil, das auf der ersten Schneckenwelle der mindestens zwei unmittelbar benachbarten Schneckenwellen liegt, ist,
noch das gleiche Schneckenprofil aufweist, wie das erste Schneckenelement mit asymmetrischem Schneckenprofil, das auf der ersten Schneckenwelle der mindestens zwei unmittelbar benachbarten Schneckenwellen liegt.

Diese ganz besonders bevorzugte Ausführungsform des erfindungsgemäßen Verfahrens stellt eine siebte Ausführungsform nach der oben dargestellten zweiten Ausführungsform oder nach der oben dargestellten fünften Ausführungsform dar.

Außerdem alternativ erfindungsgemäß besonders bevorzugt ist dabei, dass
auf mindestens zwei unmittelbar benachbarten Schneckenwellen jeweils mindestens drei Schneckenelemente mit asymmetrischem Schneckenprofil sich unmittelbar gegenüberliegen,
wobei die mindestens drei auf jeweils einer Schneckenwelle liegenden Schneckenelemente axial unmittelbar aufeinander folgen,
und wobei
das Schneckenprofil des dritten Schneckenelements der mindestens drei unmittelbar aufeinander folgenden Schneckenelemente mit asymmetrischem Schneckenprofil auf einer ersten Schneckenwelle der mindestens zwei unmittelbar benachbarten Schneckenwellen gleich dem Schneckenprofil des ersten Schneckenelements der mindestens drei unmittelbar aufeinander folgenden Schneckenelemente mit asymmetrischem Schneckenprofil auf einer ersten Schneckenwelle der mindestens zwei unmittelbar benachbarten Schneckenwellen ist.

Diese außerdem alternativ besonders bevorzugte Ausführungsform des erfindungsgemäßen Verfahrens stellt eine achte Ausführungsform nach der oben dargestellten zweiten Ausführungsform oder nach der oben dargestellten dritten Ausführungsform dar.

Für diese alternativ besonders bevorzugte achte Ausführungsform des erfindungsgemäßen Verfahrens gilt insbesondere, dass
das Schneckenprofil des dritten Schneckenelements der mindestens drei unmittelbar aufeinander folgenden Schneckenelemente mit asymmetrischem Schneckenprofil auf einer zweiten Schneckenwelle der mindestens zwei unmittelbar benachbarten Schneckenwellen gleich dem Schneckenprofil des ersten Schneckenelements der mindestens drei unmittelbar aufeinander folgenden Schneckenelemente mit asymmetrischem Schneckenprofil auf einer zweiten Schneckenwelle der mindestens zwei unmittelbar benachbarten Schneckenwellen ist.

Insbesondere erfindungsgemäß bevorzugt ist dabei, dass
auf mindestens zwei unmittelbar benachbarten Schneckenwellen jeweils mindestens vier Schneckenelemente mit asymmetrischem Schneckenprofil sich unmittelbar gegenüberliegen,
wobei die mindestens vier auf jeweils einer Schneckenwelle liegenden Schneckenelemente axial unmittelbar aufeinander folgen,
und wobei
das Schneckenprofil des vierten Schneckenelements der mindestens vier unmittelbar aufeinander folgenden Schneckenelemente mit asymmetrischem Schneckenprofil auf einer ersten Schneckenwelle der mindestens zwei unmittelbar benachbarten Schneckenwellen gleich dem Schneckenprofil des zweiten Schneckenelements der mindestens vier unmittelbar aufeinander folgenden Schneckenelemente mit asymmetrischem Schneckenprofil auf einer ersten Schneckenwelle der mindestens zwei unmittelbar benachbarten Schneckenwellen ist.

Diese insbesondere bevorzugte Ausführungsform des erfindungsgemäßen Verfahrens stellt eine neunte Ausführungsform nach der oben dargestellten achten Ausführungsform dar.

Für diese insbesondere bevorzugte neunte Ausführungsform des erfindungsgemäßen Verfahrens gilt weiter insbesondere, dass
das Schneckenprofil des vierten Schneckenelements der mindestens vier unmittelbar aufeinander folgenden Schneckenelemente mit asymmetrischem Schneckenprofil auf einer zweiten Schneckenwelle der mindestens zwei unmittelbar benachbarten Schneckenwellen gleich dem Schneckenprofil des zweiten Schneckenelements der mindestens vier unmittelbar aufeinander folgenden Schneckenelemente mit asymmetrischem Schneckenprofil auf einer zweiten Schneckenwelle der mindestens zwei unmittelbar benachbarten Schneckenwellen ist.

Insbesondere erfindungsgemäß besonders bevorzugt ist dabei, dass
auf mindestens zwei unmittelbar benachbarten Schneckenwellen jeweils gleichviele und mehr als vier Schneckenelemente mit asymmetrischem Schneckenprofil sich unmittelbar gegenüberliegen, wobei die gleichvielen und mehr als vier auf jeweils einer Schneckenwelle liegenden Schneckenelemente axial unmittelbar aufeinander folgen,
und wobei
ausgehend von einem ersten Schneckenelement mit asymmetrischem Schneckenprofil das jeweils unmittelbar nachfolgende Schneckenelement ein Schneckenprofil aufweist, das als ein das Schneckenprofil ausgestaltet ist, dass das Schneckenprofil des unmittelbar vorangehenden Schneckenelements exakt abreinigt und das Schneckenprofil des zweiten Schneckenelements kein durch Spiegelung an einer Spiegelachse erzeugtes Spiegelbild des Schneckenprofils des ersten Schneckenelements ist.

Diese insbesondere besonders bevorzugte Ausführungsform des erfindungsgemäßen Verfahrens stellt eine zehnte Ausführungsform nach der oben dargestellten neunten Ausführungsform dar.

Alternativ insbesondere erfindungsgemäß besonders bevorzugt ist dabei, dass
auf mindestens zwei unmittelbar benachbarten Schneckenwellen jeweils gleichviele und mehr als vier Schneckenelemente mit asymmetrischem Schneckenprofil sich unmittelbar gegenüberliegen, wobei die gleichvielen und mehr als vier auf jeweils einer Schneckenwelle liegenden Schneckenelemente axial unmittelbar aufeinander folgen,
und wobei
ausgehend von einem ersten Schneckenelement mit asymmetrischem Schneckenprofil das jeweils unmittelbar auf der gleichen Schneckenwelle nachfolgende Schneckenelement ein Schneckenprofil aufweist, das ein durch Spiegelung an einer Spiegelachse erzeugtes Spiegelbild des Schneckenprofils des ersten Schneckenelements der zwei unmittelbar aufeinander folgenden Schneckenelemente ist und das nicht das Schneckenprofil des ersten Schneckenelements der zwei unmittelbar aufeinander folgenden Schneckenelemente exakt abreinigt.

Diese alternative insbesondere besonders bevorzugte Ausführungsform des erfindungsgemäßen Verfahrens stellt eine elfte Ausführungsform nach der oben dargestellten neunten Ausführungsform dar.

Erfindungsgemäß außerdem alternativ bevorzugt ist dabei, dass
das Schneckenelement mit asymmetrischem Schneckenprofil, das auf einer zweiten Schneckenwelle der mindestens zwei unmittelbar benachbarten Schneckenwellen dem ersten Schneckenelement mit asymmetrischem Schneckenprofil auf der ersten Schneckenwelle der mindestens zwei unmittelbar benachbarten Schneckenwellen unmittelbar gegenüberliegt,
ein Schneckenprofil aufweist, das sich von dem Schneckenprofil des ersten Schneckenelements mit asymmetrischem Schneckenprofil, das auf der ersten Schneckenwelle der mindestens zwei unmittelbar benachbarten Schneckenwellen liegt, unterscheidet,
   und
ein Schneckenprofil aufweist, das nicht ein durch Spiegelung an einer Spiegelachse erzeugtes Spiegelbild des Schneckenprofils des ersten Schneckenelements mit asymmetrischem Schneckenprofil, das auf der ersten Schneckenwelle der mindestens zwei unmittelbar benachbarten Schneckenwellen liegt, ist,
und wobei
das Schneckenprofil des zweiten Schneckenelements der mindestens zwei unmittelbar aufeinander folgenden Schneckenelemente mit asymmetrischem Schneckenprofil auf einer ersten Schneckenwelle der mindestens zwei unmittelbar benachbarten Schneckenwellen ein durch Spiegelung an einer Spiegelachse erzeugtes Spiegelbild des ersten der mindestens zwei unmittelbar aufeinander folgenden Schneckenelemente mit asymmetrischem Schneckenprofil auf der zweiten Schneckenwelle der mindestens zwei unmittelbar benachbarten Schneckenwellen ist und
das Schneckenprofil des zweiten Schneckenelements der mindestens zwei unmittelbar aufeinander folgenden Schneckenelemente mit asymmetrischem Schneckenprofil auf einer zweiten Schneckenwelle der mindestens zwei unmittelbar benachbarten Schneckenwellen ein durch Spiegelung an einer Spiegelachse erzeugtes Spiegelbild des ersten der mindestens zwei unmittelbar aufeinander folgenden Schneckenelemente mit asymmetrischem Schneckenprofil auf der ersten Schneckenwelle der mindestens zwei unmittelbar benachbarten Schneckenwellen ist.

Diese außerdem alternativ bevorzugte Ausführungsform des erfindungsgemäßen Verfahrens stellt eine zwölfte Ausführungsform nach der oben dargestellten ersten Ausführungsform dar.

Erfindungsgemäß besonders bevorzugt ist dabei, dass
das Schneckenprofil eines dritten Schneckenelements, das dem zweiten der mindestens zwei unmittelbar aufeinander folgenden Schneckenelemente mit asymmetrischem Schneckenprofil auf einer ersten Schneckenwelle der mindestens zwei unmittelbar benachbarten Schneckenwellen unmittelbar folgt, ein Schneckenprofil aufweist, dass dem Schneckenprofil des ersten Schneckenelements der mindestens zwei unmittelbar aufeinander folgenden Schneckenelemente mit asymmetrischem Schneckenprofil auf einer ersten Schneckenwelle der mindestens zwei unmittelbar benachbarten Schneckenwellen entspricht,
   und
das Schneckenprofil eines dritten Schneckenelements, das dem zweiten der mindestens zwei unmittelbar aufeinander folgenden Schneckenelemente mit asymmetrischem Schneckenprofil auf einer zweiten Schneckenwelle der mindestens zwei unmittelbar benachbarten Schneckenwellen unmittelbar folgt, ein Schneckenprofil aufweist, dass dem Schneckenprofil des ersten Schneckenelements der mindestens zwei unmittelbar aufeinander folgenden Schneckenelemente mit asymmetrischem Schneckenprofil auf einer zweiten Schneckenwelle der mindestens zwei unmittelbar benachbarten Schneckenwellen entspricht.

Diese besonders bevorzugte Ausführungsform des erfindungsgemäßen Verfahrens stellt eine dreizehnte Ausführungsform nach der oben dargestellten zwölften Ausführungsform dar.

Erfindungsgemäß ganz besonders bevorzugt ist dabei, dass
das Schneckenprofil eines vierten Schneckenelements, das dem dritten der mindestens zwei unmittelbar aufeinander folgenden Schneckenelemente mit asymmetrischem Schneckenprofil auf einer ersten Schneckenwelle der mindestens zwei unmittelbar benachbarten Schneckenwellen unmittelbar folgt, ein Schneckenprofil aufweist, dass dem Schneckenprofil des zweiten Schneckenelements der mindestens zwei unmittelbar aufeinander folgenden Schneckenelemente mit asymmetrischem Schneckenprofil auf einer ersten Schneckenwelle der mindestens zwei unmittelbar benachbarten Schneckenwellen entspricht,
   und
das Schneckenprofil eines vierten Schneckenelements, das dem dritten der mindestens zwei unmittelbar aufeinander folgenden Schneckenelemente mit asymmetrischem Schneckenprofil auf einer zweiten Schneckenwelle der mindestens zwei unmittelbar benachbarten Schneckenwellen unmittelbar folgt, ein Schneckenprofil aufweist, dass dem Schneckenprofil des zweiten Schneckenelements der mindestens zwei unmittelbar aufeinander folgenden Schneckenelemente mit asymmetrischem Schneckenprofil auf einer zweiten Schneckenwelle der mindestens zwei unmittelbar benachbarten Schneckenwellen entspricht.

Diese ganz besonders bevorzugte Ausführungsform des erfindungsgemäßen Verfahrens stellt eine vierzehnte Ausführungsform nach der oben dargestellten dreizehnten Ausführungsform dar.

Die Anordnung der Schneckenelemente nach der zwölften Ausführungsform, der dreizehnten Ausführungsform, oder der vierzehnten Ausführungsform kann auf den unmittelbar benachbarten Schneckenwellen beliebig fortgesetzt werden.

Erfindungsgemäß insbesondere bevorzugt ist dabei, dass
auf mindestens zwei unmittelbar benachbarten Schneckenwellen jeweils gleichviele und mehr als vier Schneckenelemente mit asymmetrischen Schneckenprofil sich unmittelbar gegenüberliegen, wobei die mehr als vier auf jeweils einer Schneckenwelle liegenden Schneckenelemente axial unmittelbar aufeinander folgen,
und wobei
ausgehend von einem ersten Schneckenelement mit asymmetrischen Schneckenprofil das jeweils unmittelbar nachfolgende Schneckenelement ein Schneckenprofil aufweist,
das nicht ein durch Spiegelung an einer Spiegelachse erzeugtes Spiegelbild des Schneckenprofils des ersten Schneckenelements der zwei unmittelbar aufeinander folgenden Schneckenelemente mit asymmetrischem Schneckenprofil, das auf der gleichen Schneckenwelle der mindestens zwei unmittelbar benachbarten Schneckenwellen liegt, ist,
und wobei
das Schneckenprofil des jeweils unmittelbar nachfolgenden Schneckenelements der mehr als vier unmittelbar aufeinander folgenden Schneckenelemente mit asymmetrischem Schneckenprofil auf einer ersten Schneckenwelle der mindestens zwei unmittelbar benachbarten Schneckenwellen ein durch Spiegelung an einer Spiegelachse erzeugtes Spiegelbild des ersten der zwei unmittelbar aufeinander folgenden Schneckenelemente mit asymmetrischem Schneckenprofil auf der zweiten Schneckenwelle der mindestens zwei unmittelbar benachbarten Schneckenwellen ist
   und
das Schneckenprofil des jeweils unmittelbar nachfolgenden Schneckenelements der mindestens mehr als vier unmittelbar aufeinander folgenden Schneckenelemente mit asymmetrischem Schneckenprofil auf einer zweiten Schneckenwelle der mindestens zwei unmittelbar benachbarten Schneckenwellen ein durch Spiegelung an einer Spiegelachse erzeugtes Spiegelbild des ersten der zwei unmittelbar aufeinander folgenden Schneckenelemente mit asymmetrischem Schneckenprofil auf der ersten Schneckenwelle der mindestens zwei unmittelbar benachbarten Schneckenwellen ist. Diese insbesondere bevorzugte Ausführungsform des erfindungsgemäßen Verfahrens stellt eine fünfzehnte Ausführungsform nach der oben dargestellten ersten Ausführungsform oder der oben dargestellten vierzehnten Ausführungsform dar.

Erfindungsgemäß weiter bevorzugt ist dabei, dass
die Schneckenelemente mit asymmetrischem Schneckenprofil, die sich auf mindestens zwei unmittelbar benachbarten Schneckenwellen unmittelbar gegenüberliegen,
als eingängige, zweigängige, dreigängige, oder viergängige Schneckenelemente ausgebildet sind, bevorzugt entweder nur eingängige, oder nur zweigängige, oder nur dreigängige, oder nur viergängige Schneckenelemente sind.

Diese weiter bevorzugte Ausführungsform des erfindungsgemäßen Verfahrens stellt eine sechszehnte Ausführungsform nach der oben dargestellten ersten Ausführungsform dar.

Außerdem betrifft die Erfindung die Verwendung eines Extruder nach der Ausführungsform (1) zur Herstellung und Verarbeitung, insbesondere Entgasung oder Compoundierung oder Reaktivextrusion, von plastischen Massen, insbesondere zur Herstellung und Verarbeitung von Schmelzen oder Lösungen von thermoplastischen Polymeren oder Schmelzen oder Lösungen von Kautschuken.

Durch die erfindungsgemäße Anordnung von Schneckenelementen mit asymmetrischem Schneckenprofil auf jeweils einer Schneckenwelle eines Mehrwellenextruders wird erreicht, dass in axialer Richtung in der gleichen Gehäusebohrung die Weite eines Spalts gegenüber der Weite des in Drehrichtung vorgelagerten Gangs unabhängig von der Weite des darauffolgenden Spalts variiert werden kann.

Dadurch wie in Folge verhindert, dass bei Teilfüllung ein Gang oder mehrere Gänge einer Schneckenwelle oder eine Gehäusebohrung oder mehrere Gehäusebohrungen eines erfindungsgemäßen Mehrwellenextruders leerlaufen.

Auch wird so verhindert, dass - sofern ein Mehrwellenextruder einen Entgasungsdom aufweist - sich im Bereich eines Entgasungsdoms eines Mehrwellenextruders unerwünschterweise Extrudat ansammelt.

Auch wird durch die erfindungsgemäße Anordnung von Schneckenelementen gewährleistet, dass sowohl zwischen den Gängen einer Schneckenwelle als auch zwischen den Gehäusebohrungen ausreichend Extrudat ausgetauscht wird. Durch die erfindungsgemäße Anordnung von Schneckenelementen kann so bei zwei auf einer Schneckenwelle aufeinander folgenden Schneckenelementen bei dem in Förderrichtung zweiten Schneckenelement das Gangvolumen in Förderrichtung vor einem Kamm dieses zweiten Schneckenelements unabhängig von der Lage des entsprechenden Kamms des vorangehenden Schneckenelements verändert werden. Dadurch kommt es zu einem höheren Wärmeaustausch und einer höheren Durchmischung des Extrudats.

Im Sinne der vorliegenden Erfindung umfasst der Ausdruck "axial unmittelbar aufeinander folgen" im Zusammenhang mit den mindestens zwei auf jeweils einer Schneckenwelle liegenden Schneckenelemente mit asymmetrischem Schneckenprofil auch den Fall, dass zwischen diesen mindestens zwei Schneckenelementen jeweils mindestens ein Abstandselement eingefügt sein kann, das heißt, befindet oder befinden sich zwischen zwei axial unmittelbar aufeinanderfolgend liegenden Schneckenelementen mit asymmetrischem Schneckenprofil ein oder mehrere Abstandselemente, so werden diese zwei Schneckenelemente immer noch als axial unmittelbar aufeinander folgende Sonderschneckenelemente betrachtet. Abstandselemente werden beispielsweise zwischen in Förderrichtung aufeinanderfolgenden Schneckenelementen eingesetzt, um ein Aufeinanderlaufen von unmittelbar benachbarten Schneckenwellen durch einen technisch nicht zu vermeidenden Axialversatz zu verhindern. Solche Abstandselemente sind dem Fachmann bekannt und können beispielswiese als Distanzscheiben oder Distanzringe ausgebildet sein.

Ein solches zwischen zwei axial unmittelbar aufeinander folgenden auf einer Schneckenwelle liegenden Schneckenelemente mit asymmetrischem Schneckenprofil liegendes Abstandselement, hat bevorzugt eine axiale Länge von 1 kleiner 0,1 dg. Zwischen zwei axial unmittelbar aufeinander folgenden auf einer Schneckenwelle liegenden Schneckenelemente mit asymmetrischem Schneckenprofil können auch mehrere Abstandselemente unmittelbar hintereinander liegen. In einem solchen Fall ist die Summe der axialen Längen dieser mehreren Abstandselemente bevorzugt kleiner 0,1 dg.

Im einfachsten Fall handelt es sich bei einem Abstandselemente um einen Distanzring mit dem Durchmesser des kleinesten Abstandes des Schneckenprofils vom Drehpunkt des Schneckenelements. Der Übergang kann jedoch auch als geeigneter dreidimensionaler Übergang zwischen den aufeinander folgenden Profilkonturen gestaltet werden.

Durch die Abstandselemente wird verhindert, dass unmittelbar benachbarte Schneckenwellen beim bestimmungsgemäßen Gebrauch durch einen technisch nicht zu vermeidenden Axialversatz aufeinander laufen.

Dem Fachmann ist bekannt, dass es bei technisch ausgeführten Maschinen erforderlich ist, von der exakt abreinigenden Geometrie insofern abzuweichen, als konstante Spiele zwischen den betreffenden Schneckenelementen bei der gegenseitigen Abreinigung dieser Schneckenelemente eingehalten werden müssen. Dies ist notwendig, um metallisches "Fressen", also Kaltverschweißen als Folge von metallischem Kontakt und damit vorzeiten Verschleiß, zu verhindern, um Fertigungstoleranzen auszugleichen oder um übermäßige Energiedissipation in den Spielen zu vermeiden. Regeln zur Erzeugung von Schneckenquerschnittsprofilen für einander exakt abreinigende Schneckenelemente sind beispielsweise in [1], Seiten 107 - 121) dargestellt. Hier wird auch beschrieben, dass bei einander exakt abreinigenden Schneckenelementen ein vorgegebenes Schneckenquerschnittsprofil auf der ersten Welle eines Doppelschneckenextruders das Schneckenquerschnittsprofil auf der zweiten Welle des Doppelschneckenextruders bestimmt ([1], Seite 108). Ein Fachmann versteht daher den Begriff "einander exakt abreinigen" im Zusammenhang mit zwei Schneckenelementen, die sich auf zwei unmittelbar benachbarten Schneckenwellen jeweils unmittelbar gegenüberliegen, in einer technisch ausgeführten Maschine so, dass konstante Spiele zwischen den betreffenden Schneckenelementen bei der gegenseitigen Abreinigung dieser Schneckenelemente eingehalten werden müssen.

Gegenstand der vorliegenden Erfindung ist auch die Verwendung des erfindungsgemäßen Extruders zur Herstellung und Verarbeitung, insbesondere Entgasung oder Compoundierung oder Reaktivextrusion, von plastischen Massen, insbesondere zur Herstellung und Verarbeitung von Schmelzen oder Lösungen von thermoplastischen Polymeren oder Schmelzen oder Lösungen von Kautschuken.

Die erfindungsgemäßen Mehrwellenextruder weisen eine der Anzahl der Schneckenwellen entsprechende Anzahl von einander durchdringenden, kreisförmigen Gehäusebohrungen mit jeweils identischem Gehäuseinnendurchmesser dg auf. Die Bohrungsmittelpunkte der Gehäusebohrungen besitzen einen Abstand, der gleich dem Achsabstand a ist, wobei die Bohrungsmittelpunkte mit den Mittelpunkten des Querschnitte der jeweiligen Drehachsen der jeweiligen Schneckenwellen zusammenfallen.

Üblicherweise werden Schneckenwellen für mehrwellige Extruder nach dem Stand der Technik modular aus Schneckenelementen aufgebaut, die auf eine Kernwelle aufgezogen werden. Beim erfindungsgemäßen Mehrwellenextruder sind in einem Querschnitt des Mehrwellenextruders die Schneckenelemente mit asymmetrischem Schneckenprofil in einer Anzahl, die der Anzahl der Schneckenwellen des jeweiligen Mehrwellenextruders entspricht, auf den Schneckenwellen gegenüberliegend angeordnet.

Die Schneckenelemente mit asymmetrischem Schneckenprofil können in dem erfindungsgemäßen Extruder in Form von Knet-, Förder- oder Mischelementen vorliegen, bevorzugt sind die Schneckenelemente mit asymmetrischem Schneckenprofil Förderelemente oder Knetelemente.

Im Sinn der vorliegenden Erfindung wir unter dem Begriff "Knetscheibenprofil", auch "Knetscheibenquerschnittsprofil" genannt, die äußere Kontur einer Knetscheibe im Querschnitt rechtwinklig zur Drehachse der Knetscheibe verstanden.

Ein Förderelement zeichnet sich bekanntlich dadurch aus (siehe zum Beispiel [1], Seiten 136 - 159), dass ein Schneckenprofil in Achsrichtung kontinuierlich schraubenförmig verdreht und fortgesetzt wird. Dabei kann das Förderelement rechts- oder linksgängig sein.

Ein Knetelement zeichnet sich bekanntlich dadurch aus (siehe zum Beispiel [1], Seiten 136 - 159), dass ein Schneckenprofil in Achsrichtung absatzweise in Form von Knetscheiben fortgeführt wird. Die Anordnung der Knetscheiben kann rechts- oder linksgängig oder neutral erfolgen.

Mischelemente werden bekanntlich dadurch gebildet (siehe zum Beispiel [1], Seiten 136 - 159), dass Förderelemente mit Durchbrüchen in den Schneckenkämmen ausgeführt werden. Die Mischelemente können rechts- oder linksgängig sein. Die Durchbrüche haben bevorzugt die Form einer u- oder v-förmigen Nut, die bevorzugt gegenfördernd oder achsparallel angeordnet sind.

Schneckenelemente mit asymmetrischem Schneckenprofil, die auf sich auf benachbarten Schneckenwellen unmittelbar gegenüberliegen, reinigen sich - unter Berücksichtigung der technisch notwendigen Spiele - gegenseitig ab.

Im Sinne der vorliegenden Erfindung werden unter plastischen Massen insbesondere verstanden: Suspensionen, Pasten, Glasschmelzen, ungebrannte Keramiken, Metallschmelzen, oder Kunststoffe.

Im Sinne der vorliegenden Erfindung werden unter Kunststoffen insbesondere verstanden:
Polymere, insbesondere Polymerschmelzen oder Polymerlösungen, wiederum insbesondere Schmelzen oder Lösungen von thermoplastischen Polymeren oder Schmelzen oder Lösungen von Kautschuken.

Als thermoplastisches Polymer wird bevorzugt wenigstens eines aus der Reihe Polycarbonat, Polyamid, Polyester, insbesondere Polybutylenterephthalat und Polyethylenterephthalat, Polylactide, Polyether, thermoplastisches Polyurethan, Polyacetal, Fluorpolymer, insbesondere Polyvinylidenfluorid, Polyethersulfone, Polyolefin, insbesondere Polyethylen und Polypropylen, Polyimid, Polyacrylat, insbesondere Poly(methyl)methacrylat, Polyphenylenoxid, Polyphenylensulfid, Polyetherketon, Polyaryletherketon, Styrolpolymerisate, insbesondere Polystyrol, Styrolcopolymere, insbesondere Styrolacrylnitrilcopolymer, Acrylnitrilbutadienstyrol-blockcopolymere und Polyvinylchlorid eingesetzt. Ebenso bevorzugt eingesetzt werden so genannte Blends aus den aufgeführten Polymeren, worunter der Fachmann eine Kombination aus zwei oder mehreren Polymeren versteht. Besonders bevorzugt sind Polycarbonat und Mischungen enthaltend Polycarbonat, ganz besonders bevorzugt Polycarbonat, beispielsweise erhalten nach dem Phasengrenzflächenverfahren oder dem Schmelzeumesterungsverfahren.

Als Kautschuk wird bevorzugt wenigstens einer aus der Reihe Styrol-Butadien-Kautschuk, Naturkautschuk, Butatiden-Kautschuk, Isopren-Kautschuk, Ethylen-Propylen-Dien-Kautschuk, Ethylen-Propylen-Kautschuk, Butadien-Acrylnitril-Kautschuk, hydrierter Nitrilkautschuk, Butylkautschuk, Halobutylkautschuk, Chloropren-Kautschuk, Ethylen-Vinylacetat-Kautschuk, Polyurethan-Kautschuk, Thermoplastisches Polyurethan, Guttapercha, Arylatkautschuk, Fluorkautschuk, Siliconkautschuk, Sulfidkautschuk, Chlorsulfonyl-Polyäthylen-Kautschuk eingesetzt. Eine Kombination von zwei oder mehreren der aufgeführten Kautschuke, oder eine Kombination aus einem oder mehreren Kautschuk mit einem oder mehreren anderen Kunststoffen ist natürlich auch möglich.

Diese Thermoplaste oder Kautschuke können in reiner Form oder als Mischungen mit Füll- und Verstärkungsstoffen, wie insbesondere Glasfasern, als Mischungen untereinander oder mit anderen Polymeren oder als Mischungen mit üblichen Polymeradditiven eingesetzt werden.

In einer bevorzugten Ausführungsform werden den plastischen Massen, insbesondere den Polymerschmelzen und Mischungen von Polymerschmelzen, Additive beigemengt. Diese können als Feststoffe, Flüssigkeiten oder Lösungen gemeinsam mit dem Polymer in den Extruder gegeben werden oder aber es wird wenigstens ein Teil der Additive oder alle Additive dem Extruder über einen Seitenstrom zugeführt.

Additive können einem Polymer vielfältige Eigenschaften verleihen. Dies können beispielsweise Farbmittel, Pigmente, Verarbeitungshilfsmittel, Füllstoffe, Antioxidantien, Verstärkungsstoffe, UV-Absorber und Lichtstabilisatoren, Metalldesaktivatoren, Peroxidfänger, basische Stabilisatoren, Keimbildner, als Stabilisatoren oder Antioxidatien wirksame Benzofurane und Indolinone, Formtrennmittel, flammhemmende Additive, antistatische Mittel, Färbemittel und Schmelzestabilisatoren sein. Beispielhaft für diese sind Ruß, Glasfaser, Ton, Glimmer, Graphitfaser, Titandioxid, Kohlenstofffasern, Kohlenstoffnanoröhrchen, ionische Flüssigkeiten und Naturfasern.

Die Erfindung wird nachstehend anhand der Figuren beispielhaft näher erläutert, ohne sie jedoch auf diese zu beschränken.

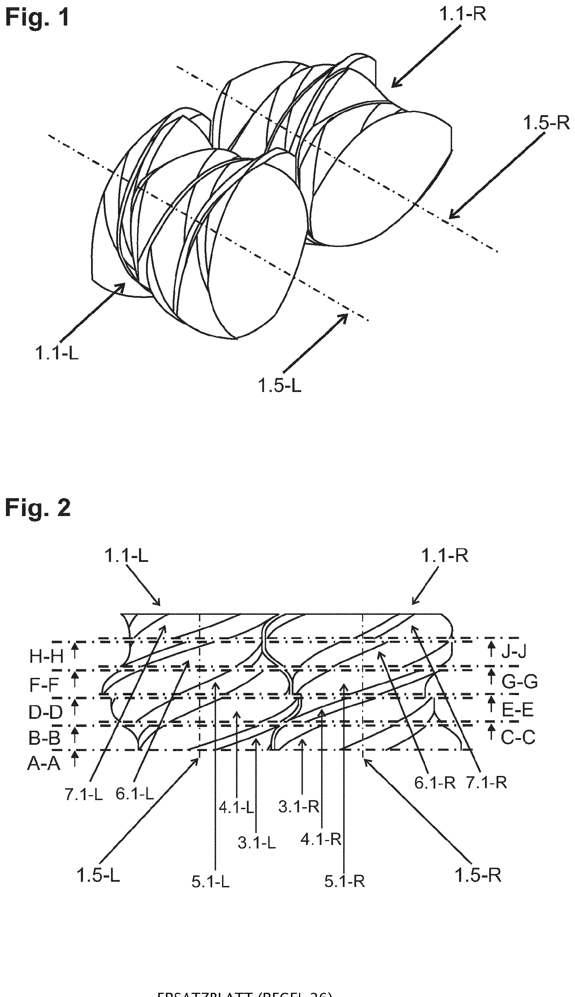

Figur 1 zeigt in einer isometrischen Projektion je einen Abschnitt zweier unmittelbar benachbarter Schneckenwellen, einer linken Schneckenwelle 1.1-L und einer rechten Schneckenwelle 1.1-R, wobei die Schneckenwellen 1.1-L und 1.1-R jeweils eine Abfolge von Förderelementen mit zweigängigem asymmetrischem Schneckenprofil aufweisen und die Schneckenwellen 1.1-L und 1.1-R für einen Doppelschneckenextruder mit gleichsinnig und gleichschnell drehenden Schneckenwellen geeignet sind. Dabei sind die Schneckenprofile auf den beiden Schneckenwellen unmittelbar gegenüberliegender Schneckenelemente als exakt einander abreinigend ausgestaltet, so dass sich die entsprechenden Schneckenelemente exakt einander abreinigen. Eingezeichnet in Figur 1 sind auch die linke Drehachse 1.5-L und die rechte Drehachse 1.5-R durch die jeweiligen Drehmittelpunkte der Schneckenprofile.
Figur 2 zeigt die Anordnung aus Figur 1 in einer Orthogonalprojektion. Zu sehen sind eine linke Schneckenwelle 1.1-L (entsprechend der linken Schneckenwelle 1.1-L aus Figur 1) und eine rechte Schneckenwelle 1.1-R (entsprechend der rechten Schneckenwelle 1.1-R aus Figur 1). Auch in Figur 2 zu sehen sind die linke Drehachse 1.5-L (entsprechend der linken Drehachse 1.5-L aus Figur 1) und die rechte Drehachse 1.5-R (entsprechend der rechten Drehachse 1.5-L aus Figur 1) durch die jeweiligen Drehmittelpunkte der Schneckenprofile. Weiter in Figur 2 zu sehen sind:
   3.1-L erstes linkes Schneckenelement,
   3.1-R erstes rechtes Schneckenelement,
   4.1-L zweites linkes Schneckenelement,
   4.1-R zweites rechtes Schneckenelement,
   5.1-L drittes linkes Schneckenelement,
   5.1-R drittes rechtes Schneckenelement,
   6.1-L viertes linkes Schneckenelement,
   6.1-R viertes rechtes Schneckenelement,
   7.1-L fünftes linkes Schneckenelement,
   7.1-R fünftes rechtes Schneckenelement,
   7.1-L fünftes linkes Schneckenelement,
   A-A Schnittebene A-A am Beginn des ersten Schneckenelementpaares 3.1-L und 3.1-R,
   B-B Schnittebene B-B am Ende des ersten Schneckenelementpaares 3.1-L und 3.1-R,
   C-C Schnittebene C-C am Beginn des zweiten Schneckenelementpaares 4.1-L und 4.1-R,
   D-D Schnittebene D-D am Ende des zweiten Schneckenelementpaares 4.1-L und 4.1-R,
   E-E Schnittebene E-E am Beginn des dritten Schneckenelementpaares 5.1-L und 5.1-R,
   F-F Schnittebene F-F am Ende des dritten Schneckenelementpaares 5.1-L und 5.1-R,
   G-G Schnittebene G-G am Beginn des vierten Schneckenelementpaares 6.1-L und 6.1-R,
   H-H Schnittebene H-H am Ende des vierten Schneckenelementpaares 6.1-L und 6.1-R,
   J-J Schnittebene J-J am Beginn des fünften Schneckenelementpaares 7.1-L und 7.1-R.

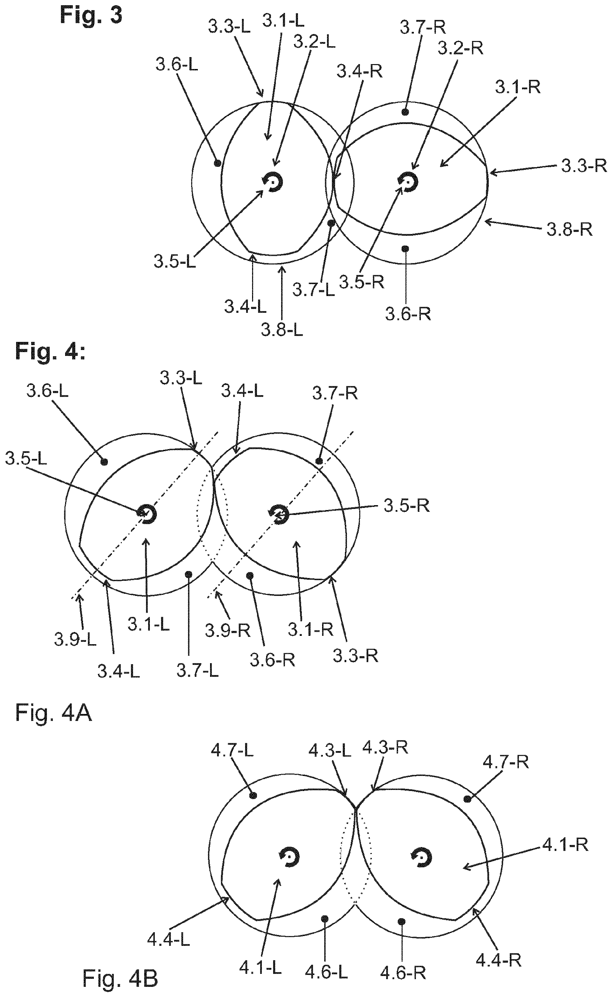

Die weiteren Figuren von Figur 3 bis Figur 7 erläutern die erfindungsgemäße Anordnung von Schneckenelementen weiter, ohne dass die Erfindung auf diese Ausführungsformen beschränkt werden soll.

Figur 3 zeigt die Schneckenprofile des ersten linken Schneckenelements 3.1-L und des ersten rechten Schneckenelements 3.1-R am Beginn des ersten Schneckenelementpaars aus Fig. 2, also gemäß Schnitt A-A. Dabei sind:
3.1-L erstes linkes Schneckenelement,
3.2-L Drehrichtung des linken Schneckenelements,
3.3-L Kamm des linken Schneckenelements mit größeren Abstand vom Drehpunkt des linken Schneckenelements als Kamm 3.4-L,
3.4-L Kamm des linken Schneckenelements mit kleineren Abstand vom Drehpunkt des linken Schneckenelements als Kamm 3.3-L,
3.5-L Drehpunkt des linken Schneckenelements,
3.6-L weiter Gang zwischen linkem Schneckenelement und Umfangslinie 3.8-L der linken Gehäusebohrung,
3.7-L enger Gang zwischen linkem Schneckenelement und Umfangslinie 3.8-L der linken Gehäusebohrung,
3.8-L Umfangslinie linke Gehäusebohrung,
3.1-R erstes rechtes Schneckenelement,
3.2-R Drehrichtung des rechten Schneckenelements,
3.3-R Kamm des rechten Schneckenelements mit größeren Abstand vom Drehpunkt des rechten Schneckenelements als Kamm 3.4-L,
3.4-R Kamm des rechten Schneckenelements mit kleineren Abstand vom Drehpunkt des rechten Schneckenelements als Kamm 3.3-L,
3.5-R Drehpunkt des rechten Schneckenelements,
3.6-L weiter Gang zwischen rechtem Schneckenelement und Umfangslinie 3.8-L der rechten Gehäusebohrung,
3.7-R enger Gang zwischen rechtem Schneckenelement und Umfangslinie 3.8-L der rechten Gehäusebohrung,
3.8-R Umfangslinie rechte Gehäusebohrung,

In der linken Gehäusebohrung ist der weite Gang 3.6-L dem Kamm 3.3-L, der die Gehäuseinnenwand eng abreinigt, vorgelagert und der enge Gang 3.7-L dem Kamm 3.4-L, der die Gehäuseinnenwand weniger eng als der Kamm 3.3-L abreinigt, vorgelagert. In der rechten Gehäusebohrung ist der weite Gang 3.6-R dem Kamm 3.4-R, der die Gehäuseinnenwand weniger eng abreinigt als der Kamm 3.3-R, vorgelagert, wohingegen dem Kamm 3.3-R, der die Gehäuseinnenwand eng abreinigt, dem engen Gang 3.7-R vorgelagert ist. Die jeweilige Gehäusebohrung ist durch deren Umfangslinie 3.8-L oder 3.8-R bestimmt, die Gehäuseinnenwand ist die äußere Begrenzung der Gehäusebohrung ausschließlich des Zwickels, d.h. des Überschneidungsbereichs, der durch die Umfangslinien der linken Gehäusebohrung 3.8-L und der rechten Gehäusebohrung 3.8-R gebildet wird.

Im der rechten und in der linken Gehäusebohrung liegen also umkehrte Verhältnisse vor, was die Abfolge von weitem Gang und Kamm mit engem oder weitem Spalt bzw. von engen Gang und Kamm mit engem oder weitem Spalt betrifft.
Figur 4 zeigt links in Fig. 4A die Schneckenprofile des ersten linken Schneckenelements 3.1-L und des ersten rechten Schneckenelements 3.1-R am Ende des ersten exakt einander abreinigenden Schneckenelementpaares aus Fig. 2, also gemäß Schnitt B-B, und rechts daneben in Fig. 4B die darauf folgenden Schneckenprofile des zweiten linken Schneckenelements 4.1-L und des zweiten rechten Schneckenelements 4.1-R am Beginn des zweiten exakt einander abreinigenden Schneckenelementpaares, also gemäß Schnitt C-C. Um zu erreichen, dass wichtige Einzelheiten der Erfindung deutlich sichtbar bleiben, wurde in Figur 4 - wie auch in den nachfolgenden Figuren - darauf verzichtet, alle Merkmale des Schneckenelementpaares mit Bezugszeichen zu versehen. Ein Fachmann kann leicht aus der Geometrie der dargestellten Gegenstände in Zusammenschau mit der Darstellung aus Figur 3 alle für das Verständnis der Figur 4 - wie auch für das Verständnis der nachfolgenden Figuren - nötigen Einzelheiten ableiten.

Der Übergang vom ersten exakt einander abreinigenden Schneckenelementpaar 3.1-L und 3.1-R aus Fig. 2 auf das zweite exakt einander abreinigende Schneckenelementpaar 4.1-L und 4.1-R aus Fig. 2 erfolgt in diesem Beispiel nach einem Achtel Steigung, also nachdem sich die Schneckenprofile des ersten Schneckenelementpaares gegenüber ihrer Ausgangsposition um 45° entgegen der Rotationsrichtung der jeweiligen Wellen um die Drehmittelpunkte der Wellen verdreht haben. Durch Spiegelung der Schneckenprofile des ersten exakt einander abreinigenden Schneckenelementpaares 3.1-L und 3.1-R aus Fig. 2 über die parallelen Spiegelachsen 3.9-L und 3.9-R durch den jeweiligen Drehmittelpunkt 3.5-L bzw. 3.5-R der Schneckenprofile der Schneckenelemente 3.1-L und 3.1-R und die Kämme 3.3-L und 3.4-L des linken Schneckenelements 3.1-L entstehen die rechts daneben in Fig. 4B abgebildeten Schneckenprofile des zweiten exakt einander abreinigenden Schneckenelementpaares 4.1-L und 4.1-R.

In der linken Gehäusebohrung wechselt dadurch die Weite der Gänge vor den Kämmen 4.3-L und 4.4-L, so dass nun der enge Gang 4.7-L dem Kamm 4.3-L mit dem engen Spalt zur Gehäuseinnenwand in Drehrichtung vorgelagert ist und der weite Gang 4.6-L dem Kamm 4.4-L mit dem weiten Spalt zur Gehäuseinnenwand vorgelagert ist. In der rechten Gehäusebohrung haben gleichzeitig die Kämme 4.3-R und 4.4-R gegenüber den davor befindlichen Gängen 4.6-R und 4.7-R ihre Position gewechselt. Dadurch ist in der rechten Gehäusebohrung nun der enge Gang 4.7-R dem Kamm 4.4-R mit dem weiten Spalt zur Gehäuseinnenwand in Drehrichtung vorgelagert, und der weite Gang 4.6-R dem Kamm 4.3-R mit dem engen Spalt zur Gehäuseinnenwand.

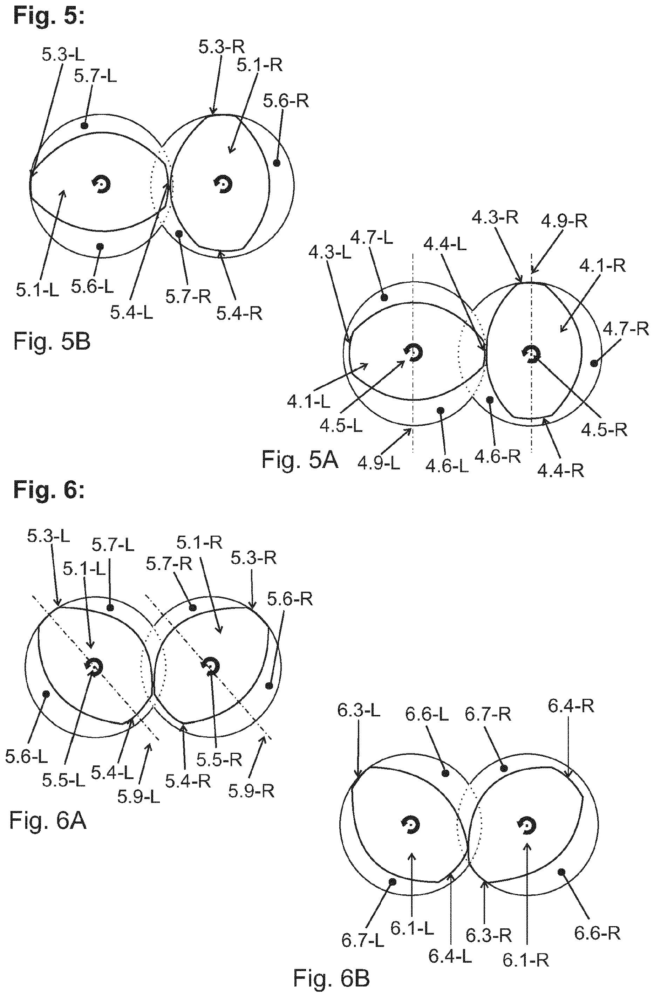

Fig. 5 zeigt rechts in Fig. 5A die Schneckenprofile des linken Schneckenelements 4.1-L und des rechten Schneckenelements 4.1-R am Ende des zweiten exakt einander abreinigenden Schneckenelementpaares aus Fig. 2, also gemäß Schnitt D-D, und links daneben in Fig. 5A die darauf folgenden Schneckenprofile des dritten linken Schneckenelements 5.1-L und des dritten rechten Schneckenelements 5.1-R am Beginn des dritten exakt einander abreinigenden Schneckenelementpaares, also gemäß Schnitt E-E.

Der Übergang vom zweiten exakt einander abreinigenden Schneckenelementpaar 4.1-L und 4.1-R aus Fig. 2 auf das dritte exakt einander abreinigende Schneckenelementpaar 5.1-L und 5.1-R aus Fig. 2 erfolgt nach einem weiteren Achtel Steigung, also nachdem sich die Schneckenprofile des zweiten Schneckenelementpaares gegenüber ihrer Ausgangsposition um weitere 45° entgegen der Rotationsrichtung der jeweiligen Wellen um die Drehmittelpunkte der Wellen verdreht haben.

Durch Spiegelung der Schneckenprofile des zweiten exakt einander abreinigenden Schneckenelementpaares 4.1-L und 4.1-R aus Fig. 2 über die rechts eingezeichneten parallelen Spiegelachsen 4.9-L und 4.9-R durch den jeweiligen Drehmittelpunkt 4.5-L bzw. 4.5-R der Scheckenprofile und die Kämme 4.3-R und 4.4-R des rechten Schneckenelements entsteht die links daneben in Fig. 5B abgebildeten Schneckenprofile des folgenden dritten Schneckenelementpaares 5.1-L und 5.1-R.

Beim Übergang vom zweiten auf das dritte Schneckenelement hat nun also in der rechten Gehäusebohrung die Weite der Gänge vor den Kämmen 5.3-R und 5.4-R gewechselt, so dass nun in der rechten Gehäusebohrung der enge Gang 5.7-R dem Kamm 5.3-R mit dem engen Spalt zur Gehäuseinnenwand in Drehrichtung vorgelagert ist und der weite Gang 5.6-R dem Kamm 5.4-R mit dem weiten Spalt zur Gehäuseinnenwand vorgelagert ist. In der linken Gehäusebohrung haben gleichzeitig die Kämme 5.3-L und 5.4-L ihre Position gewechselt. Dadurch ist nun in der linken Gehäusebohrung der weite Gang 5.6-L dem Kamm 5.3-L mit dem engen Spalt zur Gehäuseinnenwand in Drehrichtung vorgelagert und der enge Gang 5.7-L dem Kamm 5.4-L mit dem weiten Spalt zur Gehäuseinnenwand vorgelagert.

Figur 6 zeigt - analog zur Figur 4 - links in Fig. 6A die Schneckenprofile des linken Schneckenelements 5.1-L und des rechten Schneckenelements 5.1-R am Ende des dritten exakt einander abreinigenden Schneckenelementpaares aus Fig. 2, also gemäß Schnitt F-F, und rechts daneben in Fig. 6B die darauf folgenden Schneckenprofile des vierten linken Schneckenelements 6.1-L und des vierten rechten Schneckenelements 6.1-R am Beginn des vierten exakt einander abreinigenden Schneckenelementpaares, also gemäß Schnitt G-G.

Der Übergang vom dritten exakt einander abreinigenden Schneckenelementpaar 5.1-L und 5.1-R aus Fig. 2 auf das vierte exakt einander abreinigende Schneckenelementpaar 6.1-L und 6.1-R aus Fig. 2 erfolgt nochmals nach einem Achtel Steigung, also nachdem sich die Schneckenprofile des dritten Schneckenelementpaares gegenüber ihrer Ausgangsposition um 45° entgegen der Rotationsrichtung der jeweiligen Wellen um die Drehmittelpunkte der Wellen verdreht haben. Durch Spiegelung der Schneckenprofile des dritten exakt einander abreinigenden Schneckenelementpaares 5.1-L und 5.1-R aus Fig. 2 über die parallelen Spiegelachsen 5.9-L und 5.9-R durch den jeweiligen Drehmittelpunkt 5.5-L bzw. 5.5-R der Schneckenprofile der Schneckenelemente 5.1-L und 5.1-R und die Kämme 5.3-L und 5.4-L des linken Schneckenelements 5.1-L entstehen die rechts daneben in Fig. 6B abgebildeten Schneckenprofile des vierten exakt einander abreinigenden Schneckenelementpaares 6.1-L und 6.1-R.

In der linken Gehäusebohrung wechselt dadurch - analog zur Figur 4 - die Weite der Gänge vor den Kämmen 6.3-L und 6.4-L, so dass nun der enge Gang 6.7-L dem Kamm 6.3-L mit dem engen Spalt zur Gehäuseinnenwand in Drehrichtung vorgelagert ist und der weite Gang 6.6-L dem Kamm 6.4-L mit dem weiten Spalt zur Gehäuseinnenwand vorgelagert ist. In der rechten Gehäusebohrung haben gleichzeitig die Kämme 6.3-R und 6.4-R ihre Position gegenüber den in Drehrichtung davor befindlichen Gängen 6.6-R und 6.7-R gewechselt. Dadurch ist in der rechten Gehäusebohrung nun der enge Gang 6.7-R dem Kamm 6.4-R mit dem weiten Spalt zur Gehäuseinnenwand in Drehrichtung vorgelagert, und der weite Gang 6.6-R dem Kamm 6.4-R mit dem engen Spalt zur Gehäuseinnenwand.

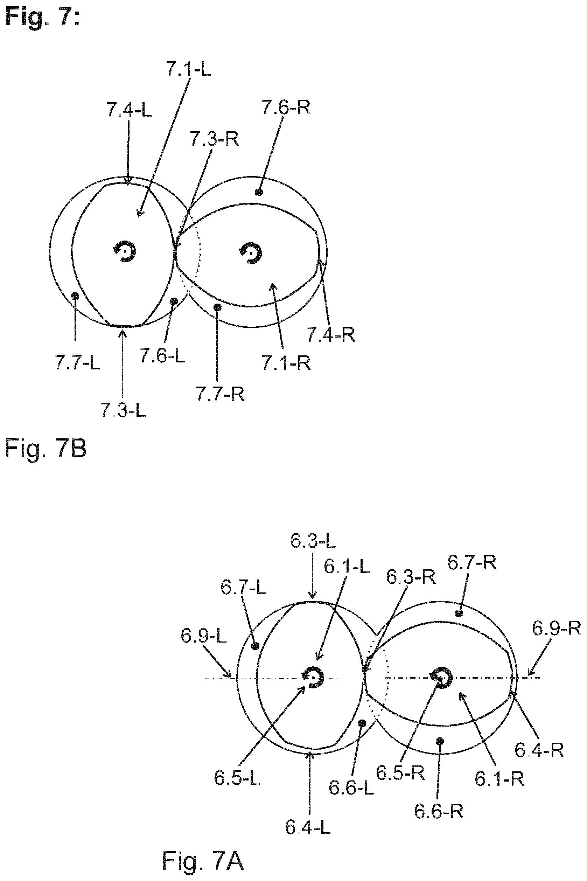

Figur 7 zeigt - analog zur Figur 5 - rechts in Fig. 7A die Schneckenprofile des linken Schneckenelements 6.1-L und des rechten Schneckenelements 6.1-R am Ende des vierten exakt einander abreinigenden Schneckenelementpaares aus Fig. 2, also gemäß Schnitt H-H, und rechts daneben in Fig. 7B die darauf folgenden Schneckenprofile des fünften linken Schneckenelements 7.1-L und des fünften rechten Schneckenelements 7.1-R am Beginn des fünften exakt einander abreinigenden Schneckenelementpaares, also gemäß Schnitt J-J.

Der Übergang vom vierten exakt einander abreinigenden Schneckenelementpaar 6.1-L und 6.1-R aus Fig. 2 auf das fünfte exakt einander abreinigende Schneckenelementpaar 7.1-L und 7.1-R aus Fig. 2 erfolgt nach einem weiteren Achtel Steigung, also nachdem sich die Schneckenprofile des vierten Schneckenelementpaares gegenüber ihrer Ausgangsposition um weitere 45° entgegen der Rotationsrichtung der jeweiligen Wellen um die Drehmittelpunkte der Wellen verdreht haben.

Durch Spiegelung der Schneckenprofile des vierten exakt einander abreinigenden Schneckenelementpaares 6.1-L und 6.1-R aus Fig. 2 über die rechts eingezeichneten parallelen Spiegelachsen 6.9-L und 6.9-R durch die jeweiligen Drehmittelpunkte 6.5-L bzw. 6.5-R der Schneckenprofile und die Kämme 6.3-R und 6.4-R des rechten Schneckenelements entstehen die links daneben in Fig. 7B abgebildeten Schneckenprofile des folgenden fünften Schneckenelementpaares 7.1-L und 7.1-R aus Fig. 2. Dabei fallen die parallelen Spiegelachsen 6.9-L und 6.9-R zu einer Spiegelachse zusammen, so dass sie in Figur 7 als nur eine Spiegelachse sichtbar sind.

Beim Übergang vom vierten auf das fünfte Schneckenelement hat nun also - analog zur Figur 5 - in der rechten Gehäusebohrung die Weite der Gänge vor den Kämmen 7.3-R und 7.4-R gewechselt. Dadurch ist nun in der rechten Gehäusebohrung der enge Gang 7.7-R dem Kamm 7.3-R mit dem engen Spalt zur Gehäuseinnenwand in Drehrichtung vorgelagert und der weite Gang 7.6-R dem Kamm 7.4-R mit dem weiten Spalt Gehäuseinnenwand vorgelagert. In der linken Gehäusebohrung haben gleichzeitig die Kämme 7.3-L und 7.4-L ihre Position gewechselt. Dadurch ist nun in der linken Gehäusebohrung der weite Gang 7.6-L dem Kamm 7.3-L mit dem engen Spalt zur Gehäuseinnenwand in Drehrichtung vorgelagert und der enge Gang 7.7-L dem Kamm 7.4-L mit dem weiten Spalt zur Gehäuseinnenwand vorgelagert.

Die Figuren 6 und 7 stellen also die Fortsetzung der Anordnung von Schneckenelementen und Schneckenelementpaaren zu einem Verfahrensbereich beliebiger Länge dar.

## Patentansprüche

1. Extruder mit zwei oder mehr gleichsinnig und gleichschnell drehenden, parallelen Schneckenwellen (1.1-L), deren unmittelbar benachbarte Drehachsen alle den gleichen Achsabstand a besitzen und mit zwei oder mehr einander durchdringenden, kreisförmigen Gehäusebohrungen um die jeweiligen Drehachsen, die jeweils einen identischen Gehäuseinnendurchmesser dg aufweisen und deren jeweilige unmittelbar benachbarte Bohrungsmittelpunkte einen Abstand besitzen, der gleich dem Achsabstand a ist, und deren jeweilige unmittelbar benachbarte Bohrungsmittelpunkte mit den Mittelpunkten des Querschnitte der jeweiligen unmittelbar benachbarten Drehachsen der Schneckenwellen (1.1-L) zusammenfallen, wobei auf mindestens zwei unmittelbar benachbarten Schneckenwellen (1.1-L) jeweils mindestens zwei Schneckenelemente (3.1-L, 5.1-L) mit asymmetrischem Schneckenprofil sich unmittelbar gegenüberliegen, und wobei die Schneckenelemente (3.1-L, 5.1-L) mit asymmetrischem Schneckenprofil, die sich auf mindestens zwei unmittelbar benachbarten Schneckenwellen (1.1-L) unmittelbar gegenüberliegen, sich einander exakt abreinigen, und wobei die mindestens zwei auf jeweils einer Schneckenwelle liegenden Schneckenelemente (3.1-L, 5.1-L) mit asymmetrischem Schneckenprofil axial unmittelbar aufeinander folgen,
**dadurch gekennzeichnet, dass** das Schneckenprofil des zweiten Schneckenelements der mindestens zwei unmittelbar aufeinander folgenden Schneckenelemente (3.1-L, 5.1-L) mit asymmetrischem Schneckenprofil auf einer ersten Schneckenwelle der mindestens zwei unmittelbar benachbarten Schneckenwellen (1.1-L) ein Schneckenprofil ist, das nicht deckungsgleich zum Schneckenprofil des ersten der mindestens zwei unmittelbar aufeinander folgenden Schneckenelemente (3.1-L, 5.1-L) mit asymmetrischem Schneckenprofil auf dieser ersten Schneckenwelle der mindestens zwei unmittelbar benachbarten Schneckenwellen (1.1-L) ist, wobei ein Schneckenprofil asymmetrisch ist, wenn es für das jeweilige Schneckenprofil keine Spiegelachse durch einen beliebigen Punkt in der Ebene des jeweiligen Schneckenprofils gibt, mit der ein zu diesem Schneckenprofil deckungsgleiches Schneckenprofil erzeugt werden kann, und wobei zwei Schneckenprofile nicht deckungsgleich sind, wenn sich ein erstes Schneckenprofil und zweites Schneckenprofil weder durch Drehung oder Verschiebung auf der Ebene des Schneckenprofils noch durch Drehung und Verschiebung auf der Ebene des Schneckenprofils ineinander überführen lassen.

2. Extruder nach Anspruch 1, wobei
das Schneckenprofil des zweiten Schneckenelements der mindestens zwei unmittelbar aufeinander folgenden Schneckenelemente mit asymmetrischem Schneckenprofil auf einer ersten Schneckenwelle der mindestens zwei unmittelbar benachbarten Schneckenwellen ein durch Spiegelung an einer Spiegelachse in der Ebene des Schneckenprofils erzeugtes Spiegelbild des Schneckenprofils des ersten der mindestens zwei unmittelbar aufeinander folgenden Schneckenelemente mit asymmetrischem Schneckenprofil auf dieser ersten Schneckenwelle der mindestens zwei unmittelbar benachbarten Schneckenwellen ist.

3. Extruder nach Anspruch 1, wobei
das Schneckenprofil des ersten Schneckenelements und das Schneckenprofil des zweiten Schneckenelements der mindestens zwei unmittelbar aufeinander folgenden Schneckenelemente mit asymmetrischem Schneckenprofil auf einer ersten Schneckenwelle der mindestens zwei unmittelbar benachbarten Schneckenwellen als einander exakt abreinigende Schneckenprofile ausgestaltet sind,
und wobei
das Schneckenprofil des zweiten Schneckenelements kein durch Spiegelung an einer Spiegelachse erzeugtes Spiegelbild des Schneckenprofils des ersten Schneckenelements ist.

4. Extruder nach Anspruch 2, wobei
das Schneckenelement mit asymmetrischem Schneckenprofil, das auf einer zweiten Schneckenwelle der mindestens zwei unmittelbar benachbarten Schneckenwellen dem ersten Schneckenelement mit asymmetrischem Schneckenprofil auf der ersten Schneckenwelle der mindestens zwei unmittelbar benachbarten Schneckenwellen unmittelbar gegenüberliegt, das gleiche Schneckenprofil aufweist wie das erste Schneckenelement mit asymmetrischem Schneckenprofil, das auf der ersten Schneckenwelle der mindestens zwei unmittelbar benachbarten Schneckenwellen liegt.

5. Extruder nach Anspruch 2 oder Anspruch 3, wobei
das Schneckenelement mit asymmetrischem Schneckenprofil, das auf einer zweiten Schneckenwelle der mindestens zwei unmittelbar benachbarten Schneckenwellen dem ersten Schneckenelement mit asymmetrischem Schneckenprofil auf der ersten Schneckenwelle der mindestens zwei unmittelbar benachbarten Schneckenwellen unmittelbar gegenüberliegt,
ein Schneckenprofil aufweist, das sich von dem Schneckenprofil des ersten Schneckenelements mit asymmetrischem Schneckenprofil, das auf der ersten Schneckenwelle der mindestens zwei unmittelbar benachbarten Schneckenwellen liegt, unterscheidet.

6. Extruder nach Anspruch 2 oder Anspruch 5, wobei
das Schneckenelement mit asymmetrischem Schneckenprofil, das auf einer zweiten Schneckenwelle der mindestens zwei unmittelbar benachbarten Schneckenwellen dem ersten Schneckenelement mit asymmetrischem Schneckenprofil auf der ersten Schneckenwelle der mindestens zwei unmittelbar benachbarten Schneckenwellen unmittelbar gegenüberliegt,
ein Schneckenprofil aufweist, das sich von dem Schneckenprofil des ersten Schneckenelements mit asymmetrischem Schneckenprofil, das auf der ersten Schneckenwelle der mindestens zwei unmittelbar benachbarten Schneckenwellen liegt, unterscheidet,
und ein Schneckenprofil aufweist, das ein durch Spiegelung an einer Spiegelachse erzeugtes Spiegelbild des Schneckenprofils des ersten Schneckenelements mit asymmetrischem Schneckenprofil, das auf der ersten Schneckenwelle der mindestens zwei unmittelbar benachbarten Schneckenwellen liegt, ist.

7. Extruder nach Anspruch 2 oder Anspruch 5, wobei
das Schneckenelement mit asymmetrischem Schneckenprofil, das auf einer zweiten Schneckenwelle der mindestens zwei unmittelbar benachbarten Schneckenwellen dem ersten Schneckenelement mit asymmetrischem Schneckenprofil auf der ersten Schneckenwelle der mindestens zwei unmittelbar benachbarten Schneckenwellen unmittelbar gegenüberliegt,
weder ein Schneckenprofil aufweist, das ein durch Spiegelung an einer Spiegelachse erzeugtes Spiegelbild des Schneckenprofils des ersten Schneckenelements mit asymmetrischem Schneckenprofil, das auf der ersten Schneckenwelle der mindestens zwei unmittelbar benachbarten Schneckenwellen liegt, ist,
noch das gleiche Schneckenprofil aufweist, wie das erste Schneckenelement mit asymmetrischem Schneckenprofil, das auf der ersten Schneckenwelle der mindestens zwei unmittelbar benachbarten Schneckenwellen liegt.

8. Extruder nach Anspruch 2 oder Anspruch 3, wobei
auf mindestens zwei unmittelbar benachbarten Schneckenwellen jeweils mindestens drei Schneckenelemente mit asymmetrischem Schneckenprofil sich unmittelbar gegenüberliegen, wobei die mindestens drei auf jeweils einer Schneckenwelle liegenden Schneckenelemente axial unmittelbar aufeinander folgen,
und wobei
das Schneckenprofil des dritten Schneckenelements der mindestens drei unmittelbar aufeinander folgenden Schneckenelemente mit asymmetrischem Schneckenprofil auf einer ersten Schneckenwelle der mindestens zwei unmittelbar benachbarten Schneckenwellen gleich dem Schneckenprofil des ersten Schneckenelements der mindestens drei unmittelbar aufeinander folgenden Schneckenelemente mit asymmetrischem Schneckenprofil auf einer ersten Schneckenwelle der mindestens zwei unmittelbar benachbarten Schneckenwellen ist.

9. Extruder nach Anspruch 8, wobei
auf mindestens zwei unmittelbar benachbarten Schneckenwellen jeweils mindestens vier Schneckenelemente mit asymmetrischem Schneckenprofil sich unmittelbar gegenüberliegen, wobei die mindestens vier auf jeweils einer Schneckenwelle liegenden Schneckenelemente axial unmittelbar aufeinander folgen,
und wobei
das Schneckenprofil des vierten Schneckenelements der mindestens vier unmittelbar aufeinander folgenden Schneckenelemente mit asymmetrischem Schneckenprofil auf einer ersten Schneckenwelle der mindestens zwei unmittelbar benachbarten Schneckenwellen gleich dem Schneckenprofil des zweiten Schneckenelements der mindestens vier unmittelbar aufeinander folgenden Schneckenelemente mit asymmetrischem Schneckenprofil auf einer ersten Schneckenwelle der mindestens zwei unmittelbar benachbarten Schneckenwellen ist.

10. Extruder nach Anspruch 9, wobei
auf mindestens zwei unmittelbar benachbarten Schneckenwellen jeweils gleichviele und mehr als vier Schneckenelemente mit asymmetrischem Schneckenprofil sich unmittelbar gegenüberliegen,
wobei die gleichvielen und mehr als vier auf jeweils einer Schneckenwelle liegenden Schneckenelemente axial unmittelbar aufeinander folgen,
und wobei
ausgehend von einem ersten Schneckenelement mit asymmetrischem Schneckenprofil das jeweils unmittelbar nachfolgende Schneckenelement ein Schneckenprofil aufweist, das als ein das Schneckenprofil ausgestaltet ist, dass das Schneckenprofil des unmittelbar vorangehenden Schneckenelements exakt abreinigt und das Schneckenprofil des zweiten Schneckenelements kein durch Spiegelung an einer Spiegelachse erzeugtes Spiegelbild des Schneckenprofils des ersten Schneckenelements ist.

11. Extruder nach Anspruch 9, wobei
auf mindestens zwei unmittelbar benachbarten Schneckenwellen jeweils gleichviele und mehr als vier Schneckenelemente mit asymmetrischem Schneckenprofil sich unmittelbar gegenüberliegen,
wobei die gleichvielen und mehr als vier auf jeweils einer Schneckenwelle liegenden Schneckenelemente axial unmittelbar aufeinander folgen,
und wobei
ausgehend von einem ersten Schneckenelement mit asymmetrischem Schneckenprofil das jeweils unmittelbar auf der gleichen Schneckenwelle nachfolgende Schneckenelement ein Schneckenprofil aufweist, das ein durch Spiegelung an einer Spiegelachse erzeugtes Spiegelbild des Schneckenprofils des ersten Schneckenelements der zwei unmittelbar aufeinander folgenden Schneckenelemente ist und das nicht das Schneckenprofil des ersten Schneckenelements der zwei unmittelbar aufeinander folgenden Schneckenelemente exakt abreinigt.

12. Extruder nach Anspruch 1, wobei
das Schneckenelement mit asymmetrischem Schneckenprofil, das auf einer zweiten Schneckenwelle der mindestens zwei unmittelbar benachbarten Schneckenwellen dem ersten Schneckenelement mit asymmetrischem Schneckenprofil auf der ersten Schneckenwelle der mindestens zwei unmittelbar benachbarten Schneckenwellen unmittelbar gegenüberliegt,
ein Schneckenprofil aufweist, das sich von dem Schneckenprofil des ersten Schneckenelements mit asymmetrischem Schneckenprofil, das auf der ersten Schneckenwelle der mindestens zwei unmittelbar benachbarten Schneckenwellen liegt, unterscheidet,
und
ein Schneckenprofil aufweist, das nicht ein durch Spiegelung an einer Spiegelachse erzeugtes Spiegelbild des Schneckenprofils des ersten Schneckenelements mit asymmetrischem Schneckenprofil, das auf der ersten Schneckenwelle der mindestens zwei unmittelbar benachbarten Schneckenwellen liegt, ist,
und wobei
das Schneckenprofil des zweiten Schneckenelements der mindestens zwei unmittelbar aufeinander folgenden Schneckenelemente mit asymmetrischem Schneckenprofil auf einer ersten Schneckenwelle der mindestens zwei unmittelbar benachbarten Schneckenwellen ein durch Spiegelung an einer Spiegelachse erzeugtes Spiegelbild des ersten der mindestens zwei unmittelbar aufeinander folgenden Schneckenelemente mit asymmetrischem Schneckenprofil auf der zweiten Schneckenwelle der mindestens zwei unmittelbar benachbarten Schneckenwellen ist
und
das Schneckenprofil des zweiten Schneckenelements der mindestens zwei unmittelbar aufeinander folgenden Schneckenelemente mit asymmetrischem Schneckenprofil auf einer zweiten Schneckenwelle der mindestens zwei unmittelbar benachbarten Schneckenwellen ein durch Spiegelung an einer Spiegelachse erzeugtes Spiegelbild des ersten der mindestens zwei unmittelbar aufeinander folgenden Schneckenelemente mit asymmetrischem Schneckenprofil auf der ersten Schneckenwelle der mindestens zwei unmittelbar benachbarten Schneckenwellen ist.

13. Extruder nach Anspruch 12, wobei
das Schneckenprofil eines dritten Schneckenelements, das dem zweiten der mindestens zwei unmittelbar aufeinander folgenden Schneckenelemente mit asymmetrischem Schneckenprofil auf einer ersten Schneckenwelle der mindestens zwei unmittelbar benachbarten Schneckenwellen unmittelbar folgt, ein Schneckenprofil aufweist, dass dem Schneckenprofil des ersten Schneckenelements der mindestens zwei unmittelbar aufeinander folgenden Schneckenelemente mit asymmetrischem Schneckenprofil auf einer ersten Schneckenwelle der mindestens zwei unmittelbar benachbarten Schneckenwellen entspricht,
und
das Schneckenprofil eines dritten Schneckenelements, das dem zweiten der mindestens zwei unmittelbar aufeinander folgenden Schneckenelemente mit asymmetrischem Schneckenprofil auf einer zweiten Schneckenwelle der mindestens zwei unmittelbar benachbarten Schneckenwellen unmittelbar folgt, ein Schneckenprofil aufweist, dass dem Schneckenprofil des ersten Schneckenelements der mindestens zwei unmittelbar aufeinander folgenden Schneckenelemente mit asymmetrischem Schneckenprofil auf einer zweiten Schneckenwelle der mindestens zwei unmittelbar benachbarten Schneckenwellen entspricht.

14. Extruder nach Anspruch 13, wobei
das Schneckenprofil eines vierten Schneckenelements, das dem dritten der mindestens zwei unmittelbar aufeinander folgenden Schneckenelemente mit asymmetrischem Schneckenprofil auf einer ersten Schneckenwelle der mindestens zwei unmittelbar benachbarten Schneckenwellen unmittelbar folgt, ein Schneckenprofil aufweist, dass dem Schneckenprofil des zweiten Schneckenelements der mindestens zwei unmittelbar aufeinander folgenden Schneckenelemente mit asymmetrischem Schneckenprofil auf einer ersten Schneckenwelle der mindestens zwei unmittelbar benachbarten Schneckenwellen entspricht,
und
das Schneckenprofil eines vierten Schneckenelements, das dem dritten der mindestens zwei unmittelbar aufeinander folgenden Schneckenelemente mit asymmetrischem Schneckenprofil auf einer zweiten Schneckenwelle der mindestens zwei unmittelbar benachbarten Schneckenwellen unmittelbar folgt, ein Schneckenprofil aufweist, dass dem Schneckenprofil des zweiten Schneckenelements der mindestens zwei unmittelbar aufeinander folgenden Schneckenelemente mit asymmetrischem Schneckenprofil auf einer zweiten Schneckenwelle der mindestens zwei unmittelbar benachbarten Schneckenwellen entspricht.

15. Extruder nach Anspruch 1 oder Anspruch 14, wobei
auf mindestens zwei unmittelbar benachbarten Schneckenwellen jeweils gleichviele und mehr als vier Schneckenelemente mit asymmetrischem Schneckenprofil sich unmittelbar gegenüberliegen,
wobei die mehr als vier auf jeweils einer Schneckenwelle liegenden Schneckenelemente axial unmittelbar aufeinander folgen,
und wobei ausgehend von einem ersten Schneckenelement mit asymmetrischem Schneckenprofil das jeweils unmittelbar nachfolgende Schneckenelement ein Schneckenprofil aufweist,
das nicht ein durch Spiegelung an einer Spiegelachse erzeugtes Spiegelbild des Schneckenprofils des ersten Schneckenelements der zwei unmittelbar aufeinander folgenden Schneckenelemente mit asymmetrischem Schneckenprofil, das auf der gleichen Schneckenwelle der mindestens zwei unmittelbar benachbarten Schneckenwellen liegt, ist,
und wobei
das Schneckenprofil des jeweils unmittelbar nachfolgenden Schneckenelements der mehr als vier unmittelbar aufeinander folgenden Schneckenelemente mit asymmetrischem Schneckenprofil auf einer ersten Schneckenwelle der mindestens zwei unmittelbar benachbarten Schneckenwellen ein durch Spiegelung an einer Spiegelachse erzeugtes Spiegelbild des ersten der zwei unmittelbar aufeinander folgenden Schneckenelemente mit asymmetrischem Schneckenprofil auf der zweiten Schneckenwelle der mindestens zwei unmittelbar benachbarten Schneckenwellen ist
und
das Schneckenprofil des jeweils unmittelbar nachfolgenden Schneckenelements der mindestens mehr als vier unmittelbar aufeinander folgenden Schneckenelemente mit asymmetrischem Schneckenprofil auf einer zweiten Schneckenwelle der mindestens zwei unmittelbar benachbarten Schneckenwellen ein durch Spiegelung an einer Spiegelachse erzeugtes Spiegelbild des ersten der zwei unmittelbar aufeinander folgenden Schneckenelemente mit asymmetrischem Schneckenprofil auf der ersten Schneckenwelle der mindestens zwei unmittelbar benachbarten Schneckenwellen ist.

## Claims

1. Extruder having two or more parallel screw shafts (1.1-1L) that rotate in the same sense and at the same speed, the directly adjacent axes of rotation of which all have the same axis spacing a, and having two or more interpenetrating circular housing bores around the respective axes of rotation, each of which has an identical housing inner diameter dg and the respective directly adjacent bore centres of which have a spacing which is equal to the axis spacing a, and the respective directly adjacent bore centres of which coincide with the centres of the cross sections of the respective directly adjacent axes of rotation of the screw shafts (1.1-L), wherein in each case at least two screw elements (3.1-L, 5.1-L) with an asymmetrical screw profile are situated directly opposite one another on at least two directly adjacent screw shafts (1.1-L), and wherein the screw elements (3.1-L, 5.1-L) with an asymmetrical screw profile which are situated directly opposite one another on at least two directly adjacent screw shafts (1.1-L) clean one another exactly, and wherein the at least two screw elements (3.1-L, 5.1-L) with an asymmetrical screw profile which are situated on in each case one screw shaft follow on directly from one another axially, **characterized in that** the screw profile of the second screw element of the at least two directly successive screw elements (3.1-L, 5.1-L) with an asymmetrical screw profile on a first screw shaft of the at least two directly adjacent screw shafts (1.1-L) is a screw profile which is not congruent with the screw profile of the first of the at least two directly successive screw elements (3.1-L, 5.1-L) with an asymmetrical screw profile on this first screw shaft of the at least two directly adjacent screw shafts (1.1-L), wherein a screw profile is asymmetrical if, for the respective screw profile, there is no mirror axis through any point in the plane of the respective screw profile by means of which a screw profile which is congruent with this screw profile can be produced, and wherein two screw profiles are not congruent if a first screw profile and a second screw profile cannot be transformed into one another either by rotation or translation on the plane of the screw profile or by rotation and translation on the plane of the screw profile.

2. Extruder according to Claim 1, wherein
the screw profile of the second screw element of the at least two directly successive screw elements with an asymmetrical screw profile on a first screw shaft of the at least two directly adjacent screw shafts is a mirror image, produced by reflection at a mirror axis in the plane of the screw profile, of the screw profile of the first of the at least two directly successive screw elements with an asymmetrical screw profile on this first screw shaft of the at least two directly adjacent screw shafts.

3. Extruder according to Claim 1, wherein
the screw profile of the first screw element and the screw profile of the second screw element of the at least two directly successive screw elements with an asymmetrical screw profile on a first screw shaft of the at least two directly adjacent screw shafts are configured as screw profiles which clean one another exactly,
and wherein
the screw profile of the second screw element is not a mirror image, produced by reflection at a mirror axis, of the screw profile of the first screw element.

4. Extruder according to Claim 2, wherein
the screw element with an asymmetrical screw profile, which is situated on a second screw shaft of the at least two directly adjacent screw shafts, directly opposite the first screw element with an asymmetrical screw profile on the first screw shaft of the at least two directly adjacent screw shafts, has the same screw profile as the first screw element with an asymmetrical screw profile, which is situated on the first screw shaft of the at least two directly adjacent screw shafts.

5. Extruder according to Claim 2 or 3, wherein
the screw element with an asymmetrical screw profile, which is situated on a second screw shaft of the at least two directly adjacent screw shafts, directly opposite the first screw element with an asymmetrical screw profile on the first screw shaft of the at least two directly adjacent screw shafts,
has a screw profile which differs from the screw profile of the first screw element with an asymmetrical screw profile, which is situated on the first screw shaft of the at least two directly adjacent screw shafts.

6. Extruder according to Claim 2 or 5, wherein
the screw element with an asymmetrical screw profile, which is situated on a second screw shaft of the at least two directly adjacent screw shafts, directly opposite the first screw element with an asymmetrical screw profile on the first screw shaft of the at least two directly adjacent screw shafts,
has a screw profile which differs from the screw profile of the first screw element with an asymmetrical screw profile, which is situated on the first screw shaft of the at least two directly adjacent screw shafts,
and has a screw profile which is a mirror image, produced by reflection at a mirror axis, of the screw profile of the first screw element with an asymmetrical screw profile, which is situated on the first screw shaft of the at least two directly adjacent screw shafts.

7. Extruder according to Claim 2 or 5, wherein
the screw element with an asymmetrical screw profile, which is situated on a second screw shaft of the at least two directly adjacent screw shafts, directly opposite the first screw element with an asymmetrical screw profile on the first screw shaft of the at least two directly adjacent screw shafts,
has neither a screw profile which is a mirror image, produced by reflection at a mirror axis, of the screw profile of the first screw element with an asymmetrical screw profile, which is situated on the first screw shaft of the at least two directly adjacent screw shafts,
nor the same screw profile as the first screw element with an asymmetrical screw profile, which is situated on the first screw shaft of the at least two directly adjacent screw shafts.

8. Extruder according to Claim 2 or 3, wherein
in each case at least three screw elements with an asymmetrical screw profile are situated directly opposite one another on at least two directly adjacent screw shafts,
wherein the at least three screw elements which are situated on in each case one screw shaft follow on directly from one another axially,
and wherein
the screw profile of the third screw element of the at least three directly successive screw elements with an asymmetrical screw profile on a first screw shaft of the at least two directly adjacent screw shafts is the same as the screw profile of the first screw element of the at least three directly successive screw elements with an asymmetrical screw profile on a first screw shaft of the at least two directly adjacent screw shafts.

9. Extruder according to Claim 8, wherein
in each case at least four screw elements with an asymmetrical screw profile are situated directly opposite one another on at least two directly adjacent screw shafts,
wherein the at least four screw elements which are situated on in each case one screw shaft follow on directly from one another axially,
and wherein
the screw profile of the fourth screw element of the at least four directly successive screw elements with an asymmetrical screw profile on a first screw shaft of the at least two directly adjacent screw shafts is the same as the screw profile of the second screw element of the at least four directly successive screw elements with an asymmetrical screw profile on a first screw shaft of the at least two directly adjacent screw shafts.

10. Extruder according to Claim 9, wherein
in each case an equal number of and more than four screw elements with an asymmetrical screw profile are situated directly opposite one another on at least two directly adjacent screw shafts,
wherein the equal number of and more than four screw elements which are situated on in each case one screw shaft follow on directly from one another axially,
and wherein
starting from a first screw element with an asymmetrical screw profile, the in each case immediately following screw element has a screw profile which is configured as a screw profile which cleans the screw profile of the immediately preceding screw element exactly, and the screw profile of the second screw element is not a mirror image, produced by reflection at a mirror axis, of the screw profile of the first screw element.

11. Extruder according to Claim 9, wherein
in each case an equal number of and more than four screw elements with an asymmetrical screw profile are situated directly opposite one another on at least two directly adjacent screw shafts,
wherein the equal number of and more than four screw elements which are situated on in each case one screw shaft follow on directly from one another axially,
and wherein
starting from a first screw element with an asymmetrical screw profile, the screw element which in each case immediately follows on the same screw shaft has a screw profile which is a mirror image, produced by reflection at a mirror axis, of the screw profile of the first screw element of the two directly successive screw elements and which does not exactly clean the screw profile of the first screw element of the two directly successive screw elements.

12. Extruder according to Claim 1, wherein
the screw element with an asymmetrical screw profile, which is situated on a second screw shaft of the at least two directly adjacent screw shafts, directly opposite the first screw element with an asymmetrical screw profile on the first screw shaft of the at least two directly adjacent screw shafts,
has a screw profile which differs from the screw profile of the first screw element with an asymmetrical screw profile, which is situated on the first screw shaft of the at least two directly adjacent screw shafts,
and
has a screw profile which is not a mirror image, produced by reflection at a mirror axis, of the screw profile of the first screw element with an asymmetrical screw profile, which is situated on the first screw shaft of the at least two directly adjacent screw shafts,
and wherein
the screw profile of the second screw element of the at least two directly successive screw elements with an asymmetrical screw profile on a first screw shaft of the at least two directly adjacent screw shafts is a mirror image, produced by reflection at a mirror axis, of the first of the at least two directly successive screw elements with an asymmetrical screw profile on the second screw shaft of the at least two directly adjacent screw shafts,
and
the screw profile of the second screw element of the at least two directly successive screw elements with an asymmetrical screw profile on a second screw shaft of the at least two directly adjacent screw shafts is a mirror image, produced by reflection at a mirror axis, of the first of the at least two directly successive screw elements with an asymmetrical screw profile on the first screw shaft of the at least two directly adjacent screw shafts.

13. Extruder according to Claim 12, wherein
the screw profile of a third screw element, which immediately follows the second of the at least two directly successive screw elements with an asymmetrical screw profile on a first screw shaft of the at least two directly adjacent screw shafts, has a screw profile which corresponds to the screw profile of the first screw element of the at least two directly successive screw elements with an asymmetrical screw profile on a first screw shaft of the at least two directly adjacent screw shafts,
and
the screw profile of a third screw element, which immediately follows the second of the at least two directly successive screw elements with an asymmetrical screw profile on a second screw shaft of the at least two directly adjacent screw shafts, has a screw profile which corresponds to the screw profile of the first screw element of the at least two directly successive screw elements with an asymmetrical screw profile on a second screw shaft of the at least two directly adjacent screw shafts.

14. Extruder according to Claim 13, wherein
the screw profile of a fourth screw element, which immediately follows the third of the at least two directly successive screw elements with an asymmetrical screw profile on a first screw shaft of the at least two directly adjacent screw shafts, has a screw profile which corresponds to the screw profile of the second screw element of the at least two directly successive screw elements with an asymmetrical screw profile on a first screw shaft of the at least two directly adjacent screw shafts,
and
the screw profile of a fourth screw element, which immediately follows the third of the at least two directly successive screw elements with an asymmetrical screw profile on a second screw shaft of the at least two directly adjacent screw shafts, has a screw profile which corresponds to the screw profile of the second screw element of the at least two directly successive screw elements with an asymmetrical screw profile on a second screw shaft of the at least two directly adjacent screw shafts.

15. Extruder according to Claim 1 or 14, wherein
in each case an equal number of and more than four screw elements with an asymmetrical screw profile are situated directly opposite one another on at least two directly adjacent screw shafts,
wherein the more than four screw elements which are situated on in each case one screw shaft follow on directly from one another axially,
and wherein, starting from a first screw element with an asymmetrical screw profile, the in each case immediately following screw element has a screw profile
which is not a mirror image, produced by reflection at a mirror axis, of the screw profile of the first screw element of the two directly successive screw elements with an asymmetrical screw profile, which is situated on the same screw shaft of the at least two directly adjacent screw shafts,
and wherein
the screw profile of the in each case directly following screw element of the more than four directly successive screw elements with an asymmetrical screw profile on a first screw shaft of the at least two directly adjacent screw shafts is a mirror image, produced by reflection at a mirror axis, of the first of the two directly successive screw elements with an asymmetrical screw profile on the second screw shaft of the at least two directly adjacent screw shafts,
and
the screw profile of the in each case directly following screw element of the at least more than four directly successive screw elements with an asymmetrical screw profile on a second screw shaft of the at least two directly adjacent screw shafts is a mirror image, produced by reflection at a mirror axis, of the first of the two directly successive screw elements with an asymmetrical screw profile on the first screw shaft of the at least two directly adjacent screw shafts.

## Revendications

1. Extrudeuse avec deux ou plus de deux arbres de vis parallèles tournant dans le même sens et à la même vitesse (1.1-L), dont les axes de rotation directement voisins possèdent tous le même entraxe a et avec deux ou plus de deux alésages de boîtier circulaires s'interpénétrant autour des axes de rotation respectifs, qui présentent respectivement un diamètre intérieur de boîtier identique dg et dont les centres d'alésage respectifs directement voisins possèdent une distance qui est égale à l'entraxe a, et dont les centres d'alésage respectifs directement voisins coïncident avec les centres de la section transversale des axes de rotation respectifs directement voisins des arbres de vis (1.1-L), au moins deux éléments de vis (3.1-L, 5.1-L) à profil de vis asymétrique étant situés directement en face l'un de l'autre sur au moins deux arbres de vis (1.1-L) directement voisins, et les éléments de vis (3.1-L, 5.1-L) à profil de vis asymétrique, qui se situent directement en face l'un de l'autre sur au moins deux arbres de vis (1.1-L) directement voisins, se nettoyant exactement l'un l'autre, et les au moins deux éléments de vis (3.1-L, 5.1-L) à profil de vis asymétrique situés respectivement sur un arbre de vis étant directement consécutifs axialement,
**caractérisée en ce que** le profil de vis du deuxième élément de vis des au moins deux éléments de vis directement consécutifs (3.1-L, 5.1-L) à profil de vis asymétrique sur un premier arbre de vis des au moins deux arbres de vis directement voisins (1.1-L) est un profil de vis qui ne coïncide pas avec le profil de vis du premier des au moins deux éléments de vis directement consécutifs (3.1-L, 5.1-L) à profil de vis asymétrique sur ce premier arbre de vis des au moins deux arbres de vis directement voisins (1.1-L), un profil de vis étant asymétrique s'il n'existe pas, pour le profil de vis respectif, d'axe de miroir passant par un point quelconque dans le plan du profil de vis respectif avec lequel un profil de vis coïncidant avec ce profil de vis peut être produit, et deux profils de vis n'étant pas coïncidents si un premier profil de vis et un deuxième profil de vis ne peuvent pas être convertis l'un en l'autre ni par rotation ou déplacement sur le plan du profil de vis ni par rotation et déplacement sur le plan du profil de vis.

2. Extrudeuse selon la revendication 1,
le profil de vis du deuxième élément de vis des au moins deux éléments de vis directement consécutifs à profil de vis asymétrique sur un premier arbre de vis des au moins deux arbres de vis directement voisins étant une image miroir, produite par réflexion sur un axe de miroir dans le plan du profil de vis, du profil de vis du premier des au moins deux éléments de vis directement consécutifs à profil de vis asymétrique sur ce premier arbre de vis des au moins deux arbres de vis directement voisins.

3. Extrudeuse selon la revendication 1,
le profil de vis du premier élément de vis et le profil de vis du deuxième élément de vis des au moins deux éléments de vis directement consécutifs à profil de vis asymétrique sur un premier arbre de vis des au moins deux arbres de vis directement voisins étant conçus sous forme de profils de vis se nettoyant exactement l'un l'autre, et
le profil de vis du deuxième élément de vis n'étant pas une image miroir, produite par réflexion sur un axe de miroir, du profil de vis du premier élément de vis.

4. Extrudeuse selon la revendication 2,
l'élément de vis à profil de vis asymétrique qui, sur un deuxième arbre de vis des au moins deux arbres de vis directement voisins, est situé directement en face du premier élément de vis à profil de vis asymétrique sur le premier arbre de vis des au moins deux arbres de vis directement voisins, présentant le même profil de vis que le premier élément de vis à profil de vis asymétrique situé sur le premier arbre de vis des au moins deux arbres de vis directement voisins.

5. Extrudeuse selon la revendication 2 ou la revendication 3,
l'élément de vis à profil de vis asymétrique qui, sur un deuxième arbre de vis des au moins deux arbres de vis directement voisins, est situé directement en face du premier élément de vis à profil de vis asymétrique sur le premier arbre de vis des au moins deux arbres de vis directement voisins,
présentant un profil de vis différent du profil de vis du premier élément de vis à profil de vis asymétrique situé sur le premier arbre de vis des au moins deux arbres de vis directement voisins.

6. Extrudeuse selon la revendication 2 ou la revendication 5,
l'élément de vis à profil de vis asymétrique qui, sur un deuxième arbre de vis des au moins deux arbres de vis directement voisins, est situé directement en face du premier élément de vis à profil de vis asymétrique sur le premier arbre de vis des au moins deux arbres de vis directement voisins,
présentant un profil de vis différent du profil de vis du premier élément de vis à profil de vis asymétrique situé sur le premier arbre de vis des au moins deux arbres de vis directement voisins,
et présentant un profil de vis qui est une image miroir, produite par réflexion sur un axe de miroir, du profil de vis du premier élément de vis à profil de vis asymétrique situé sur le premier arbre de vis des au moins deux arbres de vis directement voisins.

7. Extrudeuse selon la revendication 2 ou la revendication 5,
l'élément de vis à profil de vis asymétrique qui, sur un deuxième arbre de vis des au moins deux arbres de vis directement voisins, est situé directement en face du premier élément de vis à profil de vis asymétrique sur le premier arbre de vis des au moins deux arbres de vis directement voisins,
ne présentant ni un profil de vis qui est une image miroir, produite par réflexion sur un axe de miroir, du profil de vis du premier élément de vis à profil de vis asymétrique situé sur le premier arbre de vis des au moins deux arbres de vis directement voisins,
ni le même profil de vis que le premier élément de vis à profil de vis asymétrique situé sur le premier arbre de vis des au moins deux arbres de vis directement voisins.

8. Extrudeuse selon la revendication 2 ou la revendication 3,
au moins trois éléments de vis à profil de vis asymétrique étant situés directement en face les uns des autres sur au moins deux arbres de vis directement voisins,
les au moins trois éléments de vis situés respectivement sur un arbre de vis étant directement consécutifs axialement,
et
le profil de vis du troisième élément de vis des au moins trois éléments de vis directement consécutifs à profil de vis asymétrique sur un premier arbre de vis des au moins deux arbres de vis directement voisins étant identique au profil de vis du premier élément de vis des au moins trois éléments de vis directement consécutifs à profil de vis asymétrique sur un premier arbre de vis des au moins deux arbres de vis directement voisins.

9. Extrudeuse selon la revendication 8,
au moins quatre éléments de vis à profil de vis asymétrique étant situés directement en face les uns des autres sur au moins deux arbres de vis directement voisins,
les au moins quatre éléments de vis situés respectivement sur un arbre de vis étant directement consécutifs axialement,
et
le profil de vis du quatrième élément de vis des au moins quatre éléments de vis directement consécutifs à profil de vis asymétrique sur un premier arbre de vis des au moins deux arbres de vis directement voisins étant identique au profil de vis du deuxième élément de vis des au moins quatre éléments de vis directement consécutifs à profil de vis asymétrique sur un premier arbre de vis des au moins deux arbres de vis directement voisins.

10. Extrudeuse selon la revendication 9,
respectivement plus de quatre éléments de vis de même nombre à profil de vis asymétrique étant situés directement en face les uns des autres sur au moins deux arbres de vis directement voisins,
les plus de quatre éléments de vis de même nombre situés respectivement sur un arbre de vis étant directement consécutifs axialement,
et
en partant d'un premier élément de vis à profil de vis asymétrique, l'élément de vis directement consécutif présentant un profil de vis qui est conçu comme un profil de vis qui nettoie exactement le profil de vis de l'élément de vis directement précédent et le profil de vis du deuxième élément de vis n'étant pas une image miroir, produite par réflexion sur un axe de miroir, du profil de vis du premier élément de vis.

11. Extrudeuse selon la revendication 9,
respectivement plus de quatre éléments de vis de même nombre à profil de vis asymétrique étant situés directement en face les uns des autres sur au moins deux arbres de vis directement voisins,
les plus de quatre éléments de vis de même nombre situés respectivement sur un arbre de vis étant directement consécutifs axialement,
et
en partant d'un premier élément de vis à profil de vis asymétrique, l'élément de vis directement consécutif respectivement sur le même arbre de vis présentant un profil de vis qui est une image miroir, produite par réflexion sur un axe de miroir, du profil de vis du premier élément de vis des deux éléments de vis directement consécutifs et qui ne nettoie pas exactement le profil de vis du premier élément de vis des deux éléments de vis directement consécutifs.

12. Extrudeuse selon la revendication 1,
l'élément de vis à profil de vis asymétrique qui, sur un deuxième arbre de vis des au moins deux arbres de vis directement voisins, est situé directement en face du premier élément de vis à profil de vis asymétrique sur le premier arbre de vis des au moins deux arbres de vis directement voisins,
présentant un profil de vis différent du profil de vis du premier élément de vis à profil de vis asymétrique situé sur le premier arbre de vis des au moins deux arbres de vis directement voisins,
et
présentant un profil de vis qui n'est pas une image miroir, produite par réflexion sur un axe de miroir, du profil de vis du premier élément de vis à profil de vis asymétrique situé sur le premier arbre de vis des au moins deux arbres de vis directement voisins,
et
le profil de vis du deuxième élément de vis des au moins deux éléments de vis directement consécutifs à profil de vis asymétrique sur un premier arbre de vis des au moins deux arbres de vis directement voisins étant une image miroir, produite par réflexion sur un axe de miroir, du premier des au moins deux éléments de vis directement consécutifs à profil de vis asymétrique sur le deuxième arbre de vis des au moins deux arbres de vis directement voisins.
et
le profil de vis du deuxième élément de vis des au moins deux éléments de vis directement consécutifs à profil de vis asymétrique sur un deuxième arbre de vis des au moins deux arbres de vis directement voisins étant une image miroir, produite par réflexion sur un axe de miroir, du premier des au moins deux éléments de vis directement consécutifs à profil de vis asymétrique sur le premier arbre de vis des au moins deux arbres de vis directement voisins.

13. Extrudeuse selon la revendication 12,
le profil de vis d'un troisième élément de vis, directement consécutif au deuxième des au moins deux éléments de vis directement consécutifs à profil de vis asymétrique sur un premier arbre de vis des au moins deux arbres de vis directement voisins, présentant un profil de vis qui correspond au profil de vis du premier élément de vis des au moins deux éléments de vis directement consécutifs à profil de vis asymétrique sur un premier arbre de vis des au moins deux arbres de vis directement voisins,
et
le profil de vis d'un troisième élément de vis, directement consécutif au deuxième des au moins deux éléments de vis directement consécutifs à profil de vis asymétrique sur un deuxième arbre de vis des au moins deux arbres de vis directement voisins, présentant un profil de vis qui correspond au profil de vis du premier élément de vis des au moins deux éléments de vis directement consécutifs à profil de vis asymétrique sur un deuxième arbre de vis des au moins deux arbres de vis directement voisins.

14. Extrudeuse selon la revendication 13,
le profil de vis d'un quatrième élément de vis, directement consécutif au troisième des au moins deux éléments de vis directement consécutifs à profil de vis asymétrique sur un premier arbre de vis des au moins deux arbres de vis directement voisins, présentant un profil de vis qui correspond au profil de vis du deuxième élément de vis des au moins deux éléments de vis directement consécutifs à profil de vis asymétrique sur un premier arbre de vis des au moins deux arbres de vis directement voisins,
et
le profil de vis d'un quatrième élément de vis, directement consécutif au troisième des au moins deux éléments de vis directement consécutifs à profil de vis asymétrique sur un deuxième arbre de vis des au moins deux arbres de vis directement voisins, présentant un profil de vis qui correspond au profil de vis du deuxième élément de vis des au moins deux éléments de vis directement consécutifs à profil de vis asymétrique sur un deuxième arbre de vis des au moins deux arbres de vis directement voisins.

15. Extrudeuse selon la revendication 1 ou la revendication 14,
respectivement plus de quatre éléments de vis de même nombre à profil de vis asymétrique étant situés directement en face les uns des autres sur au moins deux arbres de vis directement voisins,
les plus de quatre éléments de vis situés respectivement sur un arbre de vis étant directement consécutifs axialement,
et, en partant d'un premier élément de vis à profil de vis asymétrique, l'élément de vis directement consécutif respectif présentant un profil de vis,
qui n'est pas une image miroir, produite par réflexion sur un axe de miroir, du profil de vis du premier élément de vis des deux éléments de vis directement consécutifs à profil de vis asymétrique situé sur le même arbre de vis des au moins deux arbres de vis directement voisins,
et
le profil de vis de l'élément de vis directement consécutif respectif des plus de quatre éléments de vis directement consécutifs à profil de vis asymétrique sur un premier arbre de vis des au moins deux arbres de vis directement voisins étant une image miroir, produite par réflexion sur un axe de miroir, du premier des deux éléments de vis directement consécutifs à profil de vis asymétrique sur le deuxième arbre de vis des au moins deux arbres de vis directement voisins
et
le profil de vis de l'élément de vis directement consécutif respectif des au moins plus de quatre éléments de vis directement consécutifs à profil de vis asymétrique sur un deuxième arbre de vis des au moins deux arbres de vis directement voisins étant une image miroir, produite par réflexion sur un axe de miroir, du premier des deux éléments de vis directement consécutifs à profil de vis asymétrique sur le premier arbre de vis des au moins deux arbres de vis directement voisins.
